# EUROPÄISCHE PATENTSCHRIFT

(11) **EP 2 702 495 B1**
(45) Veröffentlichungstag und Bekanntmachung des Hinweises auf die Patenterteilung: **09.09.2015**
(21) Anmeldenummer: 12721435.1
(22) Anmeldetag: 26.04.2012
(51) Int. Cl.: G06F 13/42, H04L 12/413, H04L 12/40

(54) **VERFAHREN UND VORRICHTUNG ZUR AN SPEICHERGRÖSSEN ANGEPASSTEN SERIELLEN DATENÜBERTRAGUNG**
METHOD AND DEVICE FOR SERIAL DATA TRANSMISSION WHICH IS ADAPTED TO MEMORY SIZES
PROCÉDÉ ET DISPOSITIF DE TRANSMISSION DE DONNÉES SÉRIELLE ADAPTÉE À LA CAPACITÉ MÉMOIRE

(30) Priorität: 26.04.2011 DE 102011017539; 29.06.2011 DE 102011078266; 05.08.2011 DE 102011080476
(43) Veröffentlichungstag der Anmeldung: 05.03.2014
(73) Patentinhaber: Robert Bosch GmbH, 70442 Stuttgart (DE)
(72) Erfinder: HARTWICH, Florian, 72762 Reutlingen (DE)
(86) Internationale Anmeldenummer: PCT/EP2012/057593
(87) Internationale Veröffentlichungsnummer: WO 2012/146631

(56) Entgegenhaltungen:
- US-A1- 2007 091 932
- "Road vehicles - Controller area network (CAN) - Part 1: Data link layer and physical signalling ; ISO 11898-1-2003", IEEE DRAFT; ISO+11898-1-2003, IEEE-SA, PISCATAWAY, NJ USA, Bd. msc.upamd, 18. November 2010 (2010-11-18), Seiten 1-52, XP017637056,

## Beschreibung

### Stand der Technik

Die Erfindung betrifft ein Verfahren sowie eine Vorrichtung zur an Speichergrößen angepassten seriellen Datenübertragung zwischen wenigstens zwei Teilnehmern in einem seriellen Bussystem.

Beispielsweise aus den Normen der Familie ISO 11898-1 bis -5 ist das Controller Area Network (CAN) sowie eine als "Time Triggered CAN" (TTCAN) bezeichnetes Erweiterung des CAN bekannt, im Folgenden auch als Norm CAN bezeichnet. Das beim CAN verwendete Medienzugriffssteuerverfahren beruht auf einer bitweisen Arbitrierung. Bei der bitweisen Arbitrierung können mehrere Teilnehmerstationen gleichzeitig Daten über den Kanal des Bussystems übertragen, ohne dass hierdurch die Datenübertragung gestört wird. Die Teilnehmerstationen können weiterhin beim Senden eines Bits über den Kanal den logischen Zustand (0 oder 1) des Kanals ermitteln. Entspricht ein Wert des gesendeten Bits nicht dem ermittelten logischen Zustand des Kanals, dann beendet die Teilnehmerstation den Zugriff auf den Kanal. Bei CAN wird die bitweise Arbitrierung üblicherweise anhand eines Identifiers innerhalb einer über den Kanal zu übertragenden Nachricht vorgenommen. Nachdem eine Teilnehmerstation den Identifier vollständig an den Kanal gesendet hat, weiß sie, dass sie exklusiven Zugriff auf den Kanal hat. Somit entspricht das Ende der Übertragung des Identifiers einem Beginn eines Freigabeintervalls, innerhalb dessen die Teilnehmerstation den Kanal exklusiv nutzen kann. Gemäß der Protokollspezifikation des CAN dürfen andere Teilnehmerstationen so lange nicht auf den Kanal zugreifen, das heißt Daten an den Kanal senden, bis die sendende Teilnehmerstation ein Prüfsummenfeld (CRC Field) der Nachricht übertragen hat. Somit entspricht ein Endzeitpunkt der Übertragung des CRC Fields einem Ende des Freigabeintervalls.

Durch die bitweise Arbitrierung wird also eine zerstörungsfreie Übertragung derjenigen Nachricht über den Kanal erreicht, die das Arbitrierungsverfahren gewonnen hat. Die Protokolle des CAN eignen sich besonders zum Übertragen kurzer Meldungen unter Echtzeitbedingungen, wobei durch geeignete Zuweisung der Identifier sichergestellt werden kann, dass besonders wichtige Nachrichten nahezu immer die Arbitrierung gewinnen und erfolgreich gesendet werden.

Mit der zunehmenden Vernetzung moderner Fahrzeuge und dem Einzug zusätzlicher Systeme zur Verbesserung beispielsweise der Fahrsicherheit oder des Fahrkomforts wachsen die Anforderungen an die zu übertragenden Datenmengen und die bei der Übertragung zulässigen Latenzzeiten. Beispiele sind Fahrdynamikregelsysteme wie z.B. das elektronische Stabilitätsprogramm ESP, Fahrerassistenzsysteme wie z.B. die automatische Abstandsregelung ACC, oder Fahrerinformationssysteme wie z.B. die Verkehrszeichenerkennung (vgl. beispielsweise Beschreibungen in "Bosch Kraftfahrtechnisches Handbuch", 27. Auflage, 2011, Vieweg+Teubner).

DE 103 11395 A1 beschreibt ein System, bei welchem asynchrone, serielle Kommunikation alternativ über ein asymmetrisches physikalisches oder über das symmetrische physikalische CAN-Protokoll erfolgen kann, und dadurch eine höhere Datenübertragungsrate oder -sicherheit für die asynchrone Kommunikation erzielbar ist.

DE 10 2007 051 657 A1 schlägt vor, in den exklusiven Zeitfenstern des TTCAN Protokolles eine asynchrone, schnelle, nicht CAN-konforme Datenübertragung anzuwenden, um die übertragene Datenmenge zu erhöhen.

G. Cena und A. Valenzano behandeln in "Overclocking of controller area networks" (Electronics Letters, Vol. 35, No. 22 (1999), S. 1924) die Auswirkungen einer Übertaktung der Busfrequenz in Teilbereichen der Nachrichten auf die effektiv erzielte Datenrate.

Es zeigt sich, dass der Stand der Technik nicht in jeder Hinsicht befriedigende Ergebnisse liefert.

### Offenbarung der Erfindung

Im Folgenden wird die Erfindung mit ihren Vorteilen anhand von Zeichnungen und Ausführungsbeispielen beschrieben. Der Gegenstand der Erfindung ist nicht auf die dargestellten und geschilderten Ausführungsbeispiele beschränkt.

### Vorteile der Erfindung

Die vorliegende Erfindung geht aus von der Übertragung von Nachrichten mit einem logischen Aufbau nach dem CAN Standard ISO 11898-1 in einem Bussystem mit mindestens zwei teilnehmenden Datenverarbeitungseinheiten, wobei der logische Aufbau ein Start-of-Frame-Bit, ein Arbitration Field, ein Control Field, ein Data Field, ein CRC Field, ein Acknowledge Field und eine End-of-Frame Sequenz umfasst, und wobei das Control Field einen Data Length Code umfasst, der eine Information über die Länge des Data Fields enthält.

Die Erfindung stellt ein Verfahren bereit, das sich dadurch auszeichnet, dass das Datenfeld von Nachrichten abweichend von der CAN-Norm ISO 11898-1 mehr als acht Bytes umfassen kann, wobei zur Feststellung der Größe des Datenfeldes die Werte der vier Bits des Data Length Codes zumindest teilweise abweichend von der CAN-Norm ISO 11898-1 interpretiert werden, und dass für die Weitergabe von Daten zwischen dem Datenfeld und der Anwendungs-Software wenigstens ein Zwischenspeicher zur Verwendung vorgesehen ist und die weitergegebene Datenmenge zumindest, wenn die Größe des Datenfeldes sich von der Größe des verwendeten Zwischenspeichers unterscheidet, entsprechend der Größendifferenz zwischen Datenfeld und verwendetem Zwischenspeicher angepasst wird. Dadurch wird der Vorteil erzielt, dass die Anwendungs-Software unverändert weitergenutzt werden kann und die Größe des Kommunikationscontrollers nicht unnötig erhöht werden muss, auch wenn die Größe des Datenfeldes gegenüber dem Norm-CAN erhöht sein kann. Vorteilhafter Weise wird aus dem Datenfeld einer über den Bus empfangenen Nachricht eine der Größe des verwendeten Zwischenspeichers entsprechende, insbesondere acht Byte umfassende Datenmenge nach einem vorgegebenen oder vorgebbaren Auswahlverfahren ausgewählt und an den Zwischenspeicher weitergegeben, wenn die Größe des Datenfeldes über der Größe des verwendeten Zwischenspeichers, typischerweise acht Byte, liegt. In das Datenfeld einer über den Bus zu sendenden Nachricht wird der Inhalt des Zwischenspeichers in wenigstens einen vorgegebenen oder vorgebbaren Bereich des Datenfeldes der Nachricht eingetragen und der oder die verbleibenden Bereiche des Datenfeldes nach einem vorgegebenen oder vorgebbaren Verfahren aufgefüllt werden, wenn die Größe des Datenfeldes über der Größe des verwendeten Zwischenspeichers liegt. Damit die Nachrichtenlänge nicht unnötig anwächst, ist es vorteilhaft, die Bits in den aufgefüllten Bereichen des Datenfeldes einer über den Bus zu sendenden Nachricht so aufzufüllen, dass gemäß den Regeln des CAN-Norm ISO 11898-1 in diesen Bereichen keine Stuff-Bits eingefügt werden müssen.

Durch das Aufstellen einer eindeutigen Zuordnung zwischen dem Inhalt des Data Length Code und der Länge des Datenfeldes wird in vorteilhafter Weise eine hohe Flexibilität bezüglich der darstellbaren Größe des Datenfeldes erreicht.

In einer vorteilhaften Ausprägung des Verfahrens erfolgt die Vergrößerung des Datenfeldes und die Anpassung der Interpretation des Inhaltes des Data Length Code in Abhängigkeit von einer ersten Umschaltbedingung, so dass bei Vorliegen der ersten Umschaltbedingung das erfindungsgemäße Verfahren zur Anwendung kommt, während sonst die Datenübertragung gemäß dem normalen CAN Standard erfolgt. Durch eine Kennzeichnung im Arbitration Field und/oder im Control Field sind erfindungsgemäße Nachrichten von CAN-normgemäßen Nachrichten unterscheidbar. Die Kennzeichnung wird in den teilnehmenden Datenverarbeitungseinheiten zur Ermittlung der ersten Umschaltbedingung ausgewertet, so dass abhängig von der ersten Umschaltbedingung der Empfangsprozess an die Größe des Datenfeldes angepasst wird. Dadurch wird der Vorteil erzielt, dass erfindungsgemäße Vorrichtungen sowohl in Standard CAN Bussystemen eingesetzt werden können, als auch in neuen, erfindungsgemäßen Bussystemen mit potenziell größeren Datenfeldern. Weiterhin ist es möglich, im Falle, dass das Datenfeld erfindungsgemäß vergrößert ist, ein geändertes Polynom zur Berechnung der Checksumme heranzuziehen und im CRC Feld zu übertragen. Dies hat den Vorteil, dass die Sicherheit der Fehlererkennung auch für größere übertragene Datenmengen erhalten bleibt. In einer besonders vorteilhaften Ausführungsform werden zu Beginn einer Nachricht parallel mehrere Berechnungen von Checksummen gestartet und es wird abhängig vom Vorliegen einer, eventuell derselben Umschaltbedingung und oder dem Inhalt des Data Length Code entschieden welches Ergebnis einer dieser Berechnungen verwendet beziehungsweise im CRC Feld übertragen wird. Dadurch ist es möglich, die Information darüber, ob eine Nachricht nach dem Norm-gemäßen Verfahren oder nach dem erfindungsgemäß modifizierten Verfahren übertragen wird, mit der Nachricht zu versenden, ohne die Empfänger im Voraus über das verwendete Verfahren zu informieren. Die Checksummen zur Prüfung der korrekten Datenübertragung liegen für beide Verfahren vor und können nach Bedarf ausgewertet werden

Kombiniert man das Verfahren mit einem Umschalten der Bitlänge beispielsweise für die Bits des Datenfeldes und des CRC Feldes, so erzielt man den weiteren Vorteil, dass eine größere Menge an Daten beschleunigt übertragen wird und die mittlere Datenübertragungsrate des Bussystems gesteigert wird. Auch hier ist es von Vorteil, die Umschaltung mit einer Umschaltbedingung zu verknüpfen und die modifiziert übertragenen Nachrichten mit geänderter Bitlänge mit einer entsprechenden Kennzeichnung zu versehen.

Die jeweils vorliegenden Umschaltbedingungen werden durch eine oder mehrere Kennzeichnungen den Empfängern mitgeteilt. Hier ist es besonders vorteilhaft, wenn wenigstens eine der Kennzeichnungen durch ein erstes Kennzeichen-Bit erfolgt, dessen Position zwischen dem letzten Bit des Identifiers und dem ersten Bit des Data Length Code liegt und an dessen Position sich in Nachrichten gemäß der CAN-Norm ISO 11898-1 ein Bit mit einem festgelegten Wert befindet um erfindungsgemäße Vorrichtungen sowohl in Standard CAN Bussystemen, als auch in neuen, erfindungsgemäßen Bussystemen einsetzen zu können.

Die weitere Kennzeichnung durch ein weiteres Kennzeichen-Bit (BRS) erfolgt vorteilhaft durch ein Bit, welches zwischen dem ersten Kennzeichen-Bit und dem ersten Bit des Data Length Code liegt. Dadurch kann die Umschaltung der Bitlänge unabhängig von der Umschaltung der CRC Berechnung beziehungsweise der Größe des Datenfeldes erfolgen und es kann flexibel auf Gegebenheiten des Bussystems reagiert werden.

Es ist vorteilhaft für die Nachvollziehbarkeit des jeweils verwendeten Übertragungsverfahrens, ein oder mehrere zusätzliche Status-Bits vorzusehen, durch welche für die Anwendungs-Software Informationen, die sich auf das von der CAN-Norm ISO 11898-1 abweichende Datenübertragungsverfahren beziehen, bereitgestellt werden. Denkbar sind etwa Status-Bits zur Mitteilung des erfolgreichen Sendens, zur Mitteilung des erfolgreichen Empfangs oder zur Mitteilung der Art des zuletzt aufgetretenen Fehlers. Abhängig von der Häufigkeit des Auftretens von Fehlern in einem von der CAN-Norm ISO 11898-1 abweichenden Datenübertragungsverfahren kann vorteilhafter Weise in das Übertragungsverfahren gemäß CAN-Norm ISO 11898-1 zurückgeschaltet werden und dies durch ein weiteres Status-Bit signalisiert werden.

Im Nachrichtenspeicher und / oder Zwischenspeicher können vorteilhaft ein oder mehrere zusätzliche Nachrichten-Bits vorgesehen sein, welche das für die jeweilige Nachricht verwendete oder zu verwendende Verfahren zur Datenübertragung kennzeichnen. Hier können beispielsweise die in der Nachricht vorgesehenen Kennzeichnungen eingetragen werden.

Das Verfahren ist vorteilhaft einsetzbar im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist. Es ist ebenfalls vorteilhaft einsetzbar im industriellen Bereich, wenn größere Datenmengen beispielsweise zu Steuerungszwecken übertragen werden müssen. Insbesondere, wenn aufgrund der Länge der Übertragungsstrecke während der Arbitrierung eine reduzierte Datenrate angewendet werden muss, damit alle Teilnehmer die Möglichkeit haben, den Zugriff auf den Bus zu erhalten, kann durch das Verfahren, insbesondere in Kombination mit der Umschaltung der Länge des Datenfeldes und der Reduktion der Bitlänge, eine höhere Datenübertragungsrate erzielt werden.

Ein weiterer Vorteil.ist, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Das zugehörige Anwendungs-Programm muss nicht geändert werden, und schon dann werden Vorteile in der Geschwindigkeit der Datenübertragung erzielt.

Es können in vorteilhafter Weise erhebliche Teile des CAN-Conformance-Tests (ISO 16845) übernommen werden. In einer vorteilhaften Ausprägung kann das erfindungsgemäße Übertragungsverfahren mit den Ergänzungen des TTCAN (ISO 11898-4) kombiniert werden.

### Zeichnungen

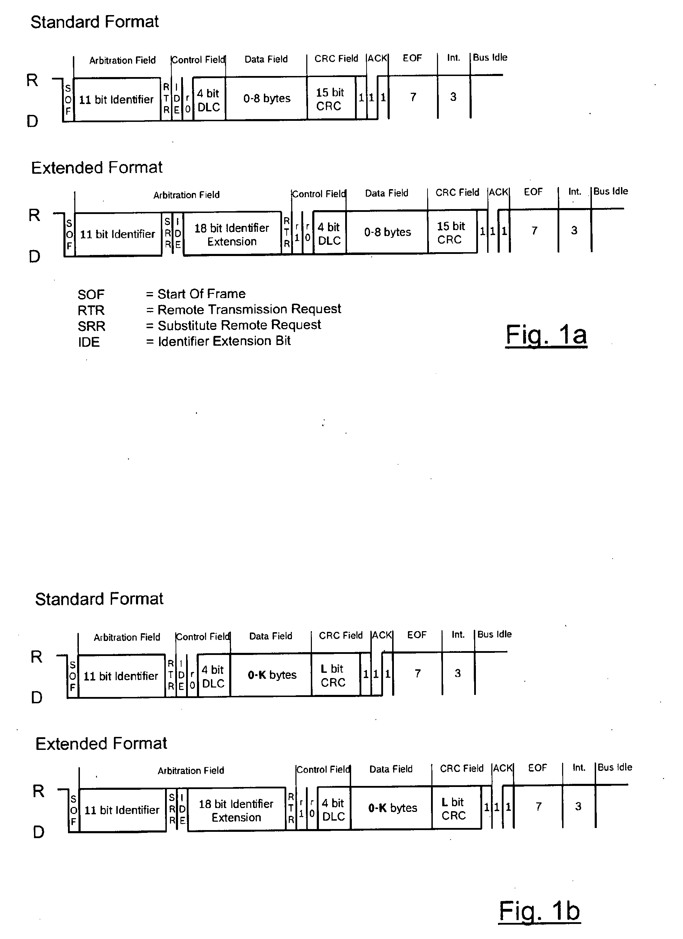

Die Erfindung wird im Weiteren anhand der Zeichnungen näher erläutert.
Figur la zeigt die zwei Alternativen (Standard/Extended) für den Aufbau von Nachrichten im CAN Format gemäß der CAN-Norm ISO 11898-1 aus dem Stand der Technik. Figur 1b zeigt die zwei analogen Alternativen für das Format der demgegenüber erfindungsgemäß modifizierten Nachrichten gemäß einem Ausführungsbeispiel der Erfindung.
Figur 2 stellt verschiedene Möglichkeiten dar, wie der Inhalt des Data Length Code erfindungsgemäß abweichend von der CAN-Norm ISO 11898-1 interpretiert werden kann.
Figur 3 stellt schematisch den erfindungsgemäßen Empfangsprozess auf einer Teilnehmerstation des Bussystems gemäß einem Ausführungsbeispiel der Erfindung dar.
Figur 4 stellt schematisch den erfindungsgemäßen Empfangsprozess auf einer Teilnehmerstation des Bussystems gemäß einem weiteren Ausführungsbeispiel der Erfindung dar.
Figur 5 zeigt für ein Ausführungsbeispiel der Erfindung das Format von erfindungsgemäß modifizierten Nachrichten, bei denen zusätzlich in festgelegten Bereichen innerhalb der Nachricht eine unterschiedliche Bitlänge verwendet wird.
Figur 6 zeigt ein Beispiel für die erfindungsgemäße Anpassung der zwischen dem Datenfeld und der Anwendungs-Software weitergegebenen Datenmenge.
Figur 7 zeigt die beiden Alternativen (Standard/Extended) für das Format der erfindungsgemäß modifizierten Nachrichten gemäß einem weiteren Ausführungsbeispiel der Erfindung, bei welchem separate Bits zur Umschaltung von Datenfeldgröße und Bitlänge verwendet werden und noch zusätzliche Bits ins Control Field aufgenommen sind.
Figur 8 zeigt den entsprechend diesem Ausführungsbeispiel der Erfindung angepassten Empfangsprozess, der auf einer Teilnehmerstation des Bussystems abläuft.

### Beschreibung der Ausführungsbeispiele

In Figur la ist der Aufbau von Nachrichten, wie sie auf einem CAN Bus zur Datenübertragung verwendet werden, dargestellt. Die beiden unterschiedlichen Formate "Standard" und "Extended" sind dargestellt. Das erfindungsgemäße Verfahren ist in geeigneten Ausführungsformen auf beide Formate anwendbar.

Die Nachricht beginnt mit einem "Start of Frame"(SOF)-Bit, das den Beginn der Nachricht signalisiert. Es schließt sich ein Abschnitt an, der in erster Linie zur Identifizierung der Nachricht dient, und anhand dessen die Teilnehmer des Bussystems entscheiden, ob sie die Nachricht empfangen oder nicht. Dieser Abschnitt wird mit "Arbitration Field" bezeichnet und enthält den Identifier. Es folgt ein "Control Field", das unter anderem den Data Length Code enthält. Der Data Length Code enthält Informationen über die Größe des Datenfeldes der Nachricht. Hieran schließt sich das eigentliche Datenfeld "Data Field" an, das die zwischen den Teilnehmern des Bussystems auszutauschenden Daten enthält. Es folgt das "CRC Field" mit der 15 Bit umfassenden Checksumme und einem Delimiter, und anschließend zwei "Acknowledge"(ACK)-Bits, die dazu dienen, den erfolgreichen Empfang einer Nachricht an den Sender zu signalisieren. Abgeschlossen wird die Nachricht durch eine "End of Frame"(EOF)-Sequenz.

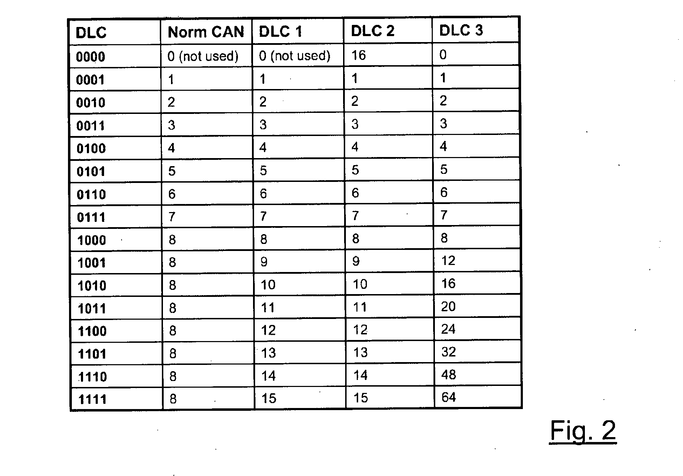

Bei dem CAN Übertragungsverfahren nach der Norm darf das Datenfeld maximal 8 Byte, also 64 Bit an Daten enthalten. Der Data Length Code umfasst gemäß der Norm vier Bits, kann also 16 verschiedene Werte annehmen. Benutzt werden aus diesem Wertebereich in heutigen Bussystemen lediglich acht verschiedene Werte für die unterschiedlichen Größen des Datenfeldes von 1 Byte bis zu 8 Byte. Ein Datenfeld von 0 Byte ist im Norm CAN nicht empfohlen, Größen oberhalb von 8 Byte sind nicht zulässig. Die Zuordnung der Werte des Data Length Code zu den Größen des Datenfeldes ist in Figur 2 in der Spalte CAN Norm dargestellt.

In Figur 1b sind in analoger Darstellung die erfindungsgemäß zu übertragenden, modifizierten Nachrichten, jeweils abgeleitet von den beiden Norm-Formaten, gegenübergestellt.

Bei dem erfindungsgemäß modifizierten Übertragungsverfahren darf das Datenfeld auch mehr als 8 Byte enthalten, nämlich in der dargestellten Ausprägung bis zu K Byte. Anders als im Norm CAN werden weitere Werte, die der Data Length Code einnehmen kann, ausgenutzt, um größere Datenfelder zu kennzeichnen. Beispielsweise können die vier Bits des Data Length Code benutzt werden, um die Werte von null bis 15 Byte darzustellen. Es können aber auch andere Zuordnungen getroffen werden, beispielsweise ist es eine Möglichkeit, den in heutigen CAN-Nachrichten üblicherweise nicht genutzten Wert des Data Length Code DLC = 0b0000 für eine weitere mögliche Größe des Datenfeldes zu benutzen, beispielsweise für die Größe 16 Byte.

Diese beiden Möglichkeiten sind in Figur 2 in Tabellenform als DLC 1 und DLC 2 dargestellt. Die Maximalgröße des Datenfeldes K hat in diesen Fällen den Wert 15 bzw. 16. Eine weitere Möglichkeit ist es, dass für die Werte des Data Length Code größer 0b1000 und bis 0b1111 die zugehörigen Größen des Datenfeldes um ein größeres Inkrement anwachsen. Ein Beispiel für diesen Fall ist in der Tabelle als DLC 3 dargestellt. Die Maximalgröße des Datenfeldes K erreicht in dieser Variante den Wert 64 Byte. Eine andere Wahl ist selbstverständlich möglich, beispielsweise ein Inkrement von jeweils 4 Byte.

Um zu gewährleisten, dass ein erfindungsgemäßer Kommunikationscontroller feststellen kann, in welcher Art er die Inhalte des Data Length Code zu interpretieren hat, ist es vorteilhaft, dass er selbständig erkennt, ob die Kommunikation des Bussystems nach Norm CAN oder dem erfindungsgemäßen Verfahren abläuft. Eine Möglichkeit hierzu besteht darin, ein reserviertes Bit innerhalb des Arbitration Field oder des Control Field zur Kennzeichnung heranzuziehen, so dass aus dieser Kennzeichnung der Kommunikatiönscontroller eine erste Umschaltbedingung ableiten kann, abhängig von der er das Übertragungsverfahren auswählt. Beispielsweise kann das in Figur 1b mit r0 bezeichnete, zweite Bit des Control Field zur Kennzeichnung verwendet werden.

Die Festlegung kann auch abhängig vom Identifier-Format gewählt werden. Für Standard Adressierung ist so eine Möglichkeit zur Kennzeichnung der erfindungsgemäßen Nachrichten das Einfügen eines rezessiven EDL-Bits (Extended Data Length) in das Control Field an der Position des im Norm-CAN stets dominanten r0-Bits. Für Extended Adressierung kann das rezessive EDL-Bits im Control Field an die Position des im Norm-CAN stets dominanten r1-Bits treten.

Eine andere Möglichkeit ist, das SRR-Bit zu verwenden, welches im Norm CAN immer rezessiv gesendet werden muss, aber von den die Nachricht empfangenden Busteilnehmern auch dominant akzeptiert wird. Es können auch Bitkombinationen zur Feststellung der ersten Umschaltbedingung ausgewertet werden.

Eine weitere Möglichkeit wäre, für das erfindungsgemäß modifizierte Übertragungsverfahren die Verwendung des Extended Formates vorzuschreiben. Nachrichten im Extended Format werden von den Busteilnehmern am Wert des IDE-Bits erkannt (vgl. Figur 1a) und dieses Bit könnte gleichzeitig die erste Umschaltbedingung darstellen, so dass für Extended Nachrichten immer das modifizierte Übertragungsverfahren zur Anwendung kommt. Alternativ wäre es auch möglich, in Extended Nachrichten das reservierte Bit r1 zur Kennzeichnung beziehungsweise zur Ableitung der ersten Umschaltbedingung zu verwenden. Das reservierte Bit kann aber auch, wie weiter unten ausgeführt, zur Ableitung einer zweiten Umschaltbedingung zur Umschaltung zwischen mehr als zwei verschiedenen Größen des Datenfeldes beziehungsweise Zuordnungen zwischen Werten des Data Length Code und Datenfeldgrößen genutzt werden.

Es ist alternativ aber auch möglich, das Verfahren in dazu geeigneten Kommunikationscontrollern zur Anwendung zu bringen, die nicht auch zur normgemäßen CAN Kommunikation ausgelegt sind. In diesem Fall kann auch die Festlegung der genannten ersten Umschaltbedingung, beispielsweise abhängig von einer geeigneten Kennzeichnung der Nachrichten, entfalten. Die Kommunikationscontroller arbeiten in diesem Fall vielmehr ausschließlich gemäß einem der beschriebenen Verfahren und sind dementsprechend nur in Bussystemen einsetzbar, in welchen ausschließlich solche erfindungsgemäßen Kommunikationscontroller im Einsatz sind.

Wird, wie in der Erfindung vorgesehen, das Datenfeld von Nachrichten vergrößert, so kann es sinnvoll sein, auch das verwendete Verfahren zum Cyclic Redundancy Check (CRC) anzupassen, um eine ausreichende Fehlersicherheit zu erhalten. Insbesondere kann es vorteilhaft sein, ein anderes CRC-Polynom, beispielsweise mit höherer Ordnung, zu verwenden und entsprechend eine CRC Field abweichender Größe in den erfindungsgemäß modifizierten Nachrichten vorzusehen. Dies ist in Figur 1b dadurch dargestellt, dass das CRC Field der erfindungsgemäßen Nachrichten im dargestellten Beispiel eine Länge von L Bit aufweist, wobei L abweichend vom Norm CAN ungleich, insbesondere größer als 15 sein kann.

Die Verwendung eines modifizierten Verfahrens zur Berechnung der CRC Checksumme kann durch eine Kennzeichnung, welche eine dritte Umschaltbedingung darstellt, den Busteilnehmern signalisiert werden. Diese Kennzeichnung und die dritte Umschaltbedingung kann aber auch mit der ersten Kennzeichnung und / oder Umschaltbedingung übereinstimmen. Auch hier kann, wie weiter oben beschrieben, beispielsweise das reservierte Bit r0 aus Figur 1b zur Kennzeichnung dienen, oder es kann das SRR-Bit verwendet werden. Auch eine Verwendung des IDE-Bit in Verbindung mit der Anwendung des Verfahrens in Extended Nachrichten, oder auch des Bit r1 kommt in Frage.

In den Norm CAN-Controllern wird der CRC-Code von zu sendenden CAN-Nachrichten mittels eines rückgekoppelten Schieberegisters erzeugt, in dessen Eingang die seriell gesendeten Bits der Nachricht sequenziell eingespeist werden. Die Breite des Schieberegisters entspricht der Ordnung des CRC-Polynoms. Die CRC-Codierung erfolgt durch eine Verknüpfung des Register-Inhalts mit dem CRC-Polynom während der Shift-Operationen. Wenn CAN-Nachrichten empfangen werden, werden entsprechend die seriell empfangenen Bits der Nachricht in das CRC-Schieberegister geschoben. Der CRC-Test ist erfolgreich, wenn am Ende des CRC-Feldes alle Bits des Schieberegisters auf Null stehen. Die CRC-Code-Generierung im Sendefall und der CRC-Test im Empfangsfall erfolgen beide in Hardware, ohne dass ein Eingriff der Software notwendig ist. Eine Modifikation der CRC-Codierung hat also keine Auswirkung auf die Anwendungs-Software.

In einer möglichen Ausführungsform wird der Kommunikationscontroller so ausgelegt, dass er Kompatibilität zum Norm CAN aufweist, also in einem Norm CAN Bussystem normgemäß arbeitet, während er in einem erfindungsgemäß modifizierten Bussystem einerseits größere Datenfelder in den Nachrichten zulässt und andererseits auch die angepasste Berechnung und Prüfung des CRC-Code durchführt.

Da am Anfang des Empfanges einer Nachricht noch nicht feststeht, ob eine Norm-konforme CAN-Nachricht oder eine erfindungsgemäß modifizierte Nachricht empfangen wird, werden in einem erfindungsgemäßen Kommunikationscontroller zwei CRC-Schieberegister implementiert, die parallel arbeiten. Nach dem Empfang des CRC Delimiter, wenn der CRC-Code im Empfänger ausgewertet wird, steht aufgrund der erfindungsgemäßen Kennzeichnung beziehungsweise der beispielsweise aus der Kennzeichnung oder dem Inhalt des Data Length Code abgeleiteten dritten Umschaltbedingung auch fest, welches Übertragungsverfahren angewendet wurde, und es wird dann das diesem Übertragungsverfahren zugeordnete Schieberegister ausgewertet. Die dritte Umschaltbedingung kann, wie früher bereits dargestellt, mit der ersten Umschaltbedingung, die die Größe des Datenfeldes und die Interpretation des Data Length Code betrifft, übereinstimmen.

Am Anfang des Sendens einer Nachricht steht zwar für den Sender bereits fest, nach welchem Übertragungsverfahren gesendet werden soll. Da es jedoch vorkommen kann, dass die Arbitration um den Buszugriff verloren wird und die begonnene Nachricht nicht gesendet, sondern stattdessen eine andere Nachricht empfangen wird, werden auch hier beide CRC-Schieberegister parallel angesteuert.

Die beschriebene Implementation zweier parallel arbeitender CRC-Schieberegister ermöglicht auch eine weitere Verbesserung: Das CRC-Polynom des Norm CAN-Protokolls (x15 + x14 + x10 + x8 + x7 + x4 + x3 + 1) ist für eine Nachrichten-Länge von weniger als 127 Bits ausgelegt. Wenn erfindungsgemäß übertragene Nachrichten auch längere Datenfelder verwenden, ist es sinnvoll, zur Aufrechterhaltung der Übertragungssicherheit ein anderes, insbesondere längeres CRC-Polynom zu verwenden. Die erfindungsgemäß übermittelten Nachrichten erhalten dementsprechend ein geändertes, insbesondere längeres CRC Field. Im laufenden Betrieb wechseln die Kommunikationscontroller dynamisch zwischen den beiden CRC-Schieberegistern, also dem Norm CAN-gemäßen und dem erfindungsgemäßen Schieberegister, um das jeweils passende Polynom zu verwenden.

Natürlich können auch mehr als zwei Schieberegister und dementsprechend mehr als zwei CRC-Polynome abgestuft in Abhängigkeit von der Länge des Datenfeldes oder der gewünschten Übertragungssicherheit zum Einsatz kommen. In diesem Fall muss, sofern eine Kompatibilität zum Norm CAN erhalten bleiben soll, die entsprechende Kennzeichnung und die damit verbundene Umschaltbedingung angepasst werden. Beispielsweise könnte durch das reservierte Bit r0 oder das SRR-Bit in Figur 1b eine erste Umschaltbedingung ausgelöst werden, welche ein Umschalten auf längere Datenfelder, beispielsweise gemäß DLC 1 auf Figur 2, und ein zugehöriges zweites CRC-Polynom kennzeichnet. Für Nachrichten im Extended Format könnte zusätzlich, etwa durch das reservierte Bit r1 oder das IDE-Bit in Figur 1b, eine zweite Umschaltbedingung ausgelöst werden, welche die Umschaltung auf einen weiteren Satz von Datenfeldgrößen, beispielsweise DLC 3 aus Figur 2, und ein drittes CRC-Polynom kennzeichnet.

Es ist im übrigen auch möglich, dass die erste Umschaltbedingung, etwa durch das reservierte Bit r0 oder das SRR-Bit, auf die Möglichkeit längerer Datenfelder und die entsprechende Interpretation des Inhaltes des Data Length Code umschaltet, und dass Ermittlung der dritten Umschaltbedingung und damit einhergehend die Auswahl des für die CRC-Prüfung auszuwertenden CRC-Polynoms dann abhängig vom Inhalt des Data Length Code erfolgt. Die dritte Umschaltbedingung kann dementsprechend auch mehr als zwei Werte annehmen. Beispielsweise könnten die Datenfeldgrößen gemäß DLC 3 ausgewählt werden, also Werte zwischen 0 und 64 Byte annehmen, und es könnten dann drei CRC-Polynome parallel über geeignete Schieberegister gerechnet werden, zum Beispiel das Norm CRC-Polynom für Datenfelder bis zu 8 Byte, ein zweites CRC-Polynom für Datenfelder bis zu 24 Byte und ein drittes CRC-Polynom für Datenfelder bis zu 64 Byte.

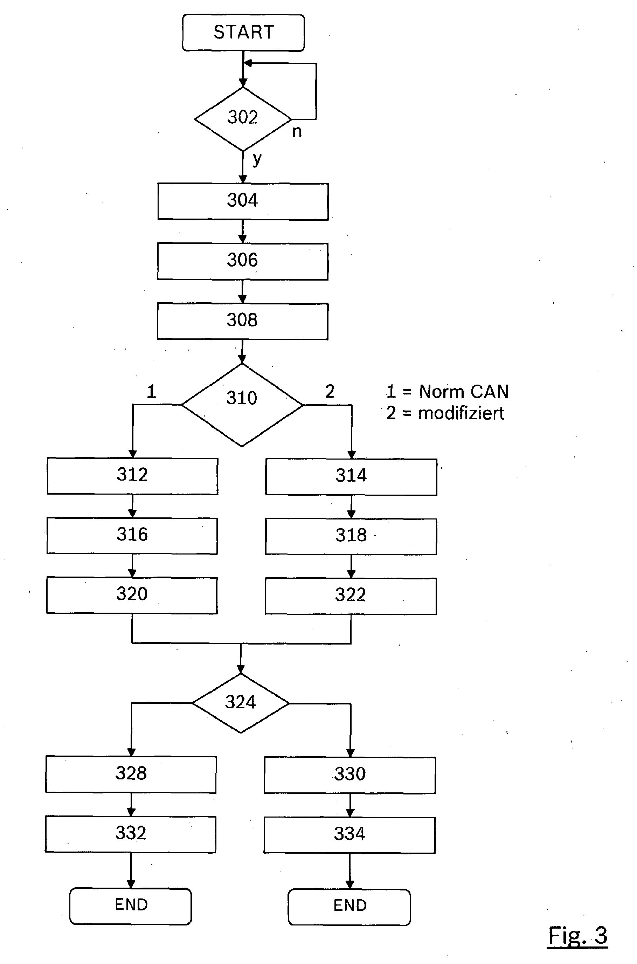

Figur 3 zeigt in vereinfachter Darstellung einen Ausschnitt des erfindungsgemäßen Empfangsprozesses, wie er auf einer Teilnehmerstation des Bussystems abläuft. Dargestellt ist hier der Fall, bei welchem eine Kompatibilität zum Norm CAN erreicht wird, indem abhängig von der ersten Umschaltbedingung das Verhalten des Kommunikationscontrollers angepasst wird. Obwohl in Figur 3 eine für die Beschreibung von Programmabläufen in Software übliche Darstellung gewählt wurde, ist das Verfahren vollständig zur Implementierung in Hardware geeignet.

Die Teilnehmerstation befindet sich zunächst in einem den Bus abtastenden Zustand, so lange auf dem Bus kein Kommunikationsverkehr herrscht. Die Abfrage 302 wartet also auf ein dominantes Bit auf dem Bus. Dieses Bit kennzeichnet den Beginn einer neuen Nachricht.

Sobald der Beginn einer neuen Nachricht festgestellt wurde beginnt im Block 304 die Berechnung der wenigstens zwei parallel zu berechnenden Checksummen. Die erste Checksumme entspricht der CRC Berechnung des Norm CAN, während die zweite Checksumme nach dem neuen Verfahren berechnet wird.

Es werden anschließend ab dem Schritt 306 die weiteren, auf das SOF-Bit folgenden Bits der Nachricht, beginnend mit dem Arbitration Field, empfangen. Falls mehrere Busteilnehmer eine Nachricht versenden wollen, wird hierbei nach dem aus dem Norm CAN üblichen Verfahren unter den Busteilnehmern ausgehandelt, welcher Busteilnehmer den Zugriff auf den Bus erhält. Der dargestellte Block 306 kennzeichnet den Empfang aller Bits, bis die erste Kennzeichnung empfangen wurde beziehungsweise die erste Umschaltbedingung feststeht. In den aufgeführten Beispielen wird die erste Umschaltbedingung aus dem Arbitration Field, beispielsweise aus dem SRR-Bit oder dem IDE-Bit, oder aus dem Control Field, beispielsweise aus einem reservierten Bit desselben, ermittelt (vgl. Figur 1). Anschließend können in Block 308 noch weitere Bits der Nachricht empfangen werden, bis ab einem bestimmten Bit der Nachricht abhängig von der ermittelten ersten Umschaltbedingung unterschiedlich verfahren wird. Diese Aufspaltung in unterschiedliche Verfahrensweisen wird durch eine entsprechende Abfrage oder Verzweigung 310 gewährleistet, wie im Folgenden beispielhaft dargestellt.

Liegt bei der Verzweigung 310, beispielsweise nach Empfang der ersten zwei Bits des Control Field, die Information vor, dass gemäß der ersten Umschaltbedingung die Kommunikation nach Norm CAN erfolgt (der mit "1" bezeichnete Pfad der Figur 3), so werden im Schritt 312 die weiteren Bits des Control Field eingelesen. Aus diesen Bits wird gemäß Norm CAN der Data Length Code ausgewertet und es wird anschließend in Schritt 316 die zugehörige Menge an Daten, maximal 8 Byte, entsprechend dem Datenfeld, empfangen. Im Schritt 320 wird dann das 15 Bit umfassende CRC Feld empfangen. Liegt bei der Verzweigung 324 die Information vor, dass die die vom Sender übermittelte und die vom Empfänger selbst ermittelte CRC Checksumme übereinstimmen, wird in Block 328 ein dominantes Acknowledge-Bit gesendet. Es ist zu beachten, dass in diesem Fall die normgemäße CRC Checksumme verglichen wird, da die Kommunikation nach Norm CAN erfolgt. Wird keine Übereinstimmung festgestellt, wird (Block 330) das Acknowledge-Bit rezessiv gesendet. Anschließend folgen ACK Delimiter und EOF Bits (siehe Figur 1b, in Figur 3 nicht dargestellt).

Liegt hingegen bei der Verzweigung 310, beispielsweise nach Empfang der ersten zwei Bits des Control Field, die Information vor, dass gemäß der ersten Umschaltbedingung das erfindungsgemäß modifizierte Kommunikationsverfahren anzuwenden ist (der mit "2" bezeichnete Pfad der Figur 3), so werden im Block 314 die weiteren Bits des Control Field eingelesen. Aus dem Ergebnis wird der Data Length Code nach der neuen Interpretation, für die einige Beispiele tabellenartig in Figur 2 aufgeführt sind, ermittelt. Im Block 318 wird die entsprechende Menge an Daten, also für das Beispiel DLC 1 aus der Tabelle in Figur 2 bis zu 15 Byte, für das Beispiel DLC 2 bis zu 16 Byte, für das Beispiel DLC 3 bis zu 64 Byte Daten empfangen. Im Block 322 wird das erfindungsgemäß abweichende, insbesondere längere CRC Feld empfangen. Liegt bei der Verzweigung 324 die Information vor, dass die vom Sender übermittelte und die vom Empfänger selbst ermittelte CRC Checksumme übereinstimmen, wobei in diesem Fall der Vergleich auf der erfindungsgemäß abweichenden CRC Checksumme basiert, wird in Block 328 ein dominantes Acknowledge-Bit gesendet. Andernfalls wird (Block 330) das Acknowledge-Bit rezessiv gesendet. Anschließend folgen in Schritt 332 beziehungsweise 334 der ACK Delimiter und die EOF Bits. Damit ist ein Empfangsprozess für eine Nachricht beendet.

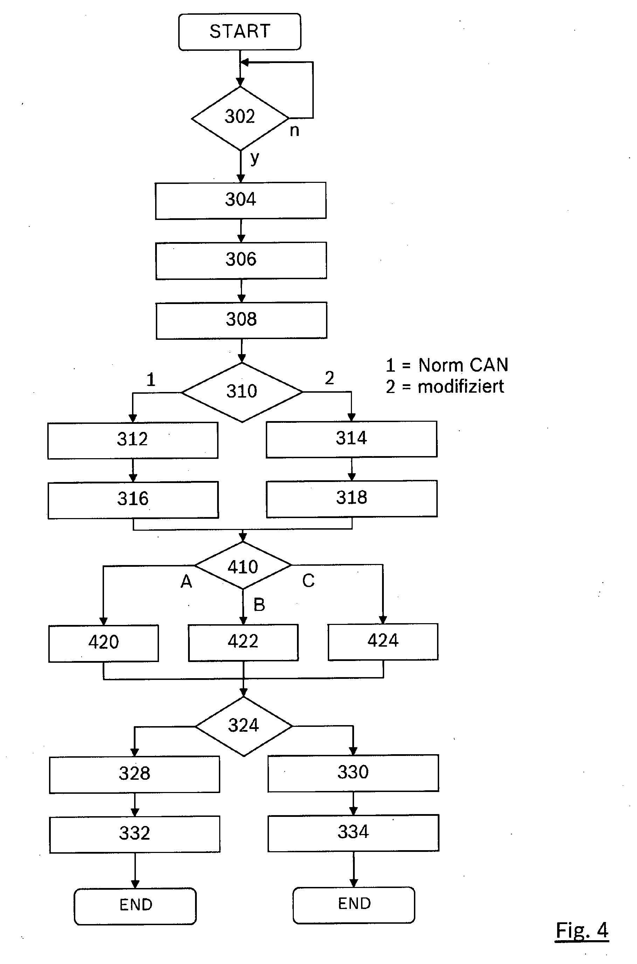

In Figur 3 wurde der Fall dargestellt, in welchem die dritte Umschaltbedingung, welche die zu verwendende CRC bestimmt, mit der ersten Umschaltbedingung, die die Größe des Datenfeldes und die Interpretation des Data Length Code betrifft, übereinstimmt. Es wurde also vor dem Empfang 320 beziehungsweise 322 der CRC Checksummen nicht nochmals abgefragt, welche CRC gemäß der dritten Umschaltbedingung zu empfangen und für die Verzweigung 324 auszuwerten ist. Durch eine einfache Modifikation des Ablaufdiagrammes aus Figur 3 ist diese zusätzliche Abfrage in den Ablauf aufnehmbar, wie in Figur 4 dargestellt ist.

Bei dem derartig modifizierten Empfangsprozess gemäß Figur 4 wird nach Empfang der gemäß der Information aus dem Data Length Code erwarteten Anzahl von Datenbytes des Datenfeldes in Block 316 beziehungsweise 318 in der Abfrage oder Verzweigung 410 ermittelt, welchen Wert die dritte Umschaltbedingung aufweist. Diese Information kann, wie früher beschrieben, beispielsweise aus der entsprechenden dritten Kennzeichnung, oder aus dem Inhalt des Data Length Code ermittelt worden sein. Im dargestellten Beispiel gibt es drei verschiedene Werte für die dritte Umschaltbedingung, nämlich A, B und C. Abhängig vom Wert der Umschaltbedingung wird dann in den Blöcken 420, 422 und 424 eine unterschiedliche Anzahl von Bits des CRC Field eingelesen, beispielsweise für den Wert A 15 Bits, für den Wert B 17 Bits und für den Wert C 19 Bits. Anschließend wird bei der Verzweigung 324 analog zu Figur 3 geprüft, ob die vom Sender übermittelte und die vom Empfänger selbst ermittelte CRC Checksumme übereinstimmen und abhängig davon weiter verfahren.

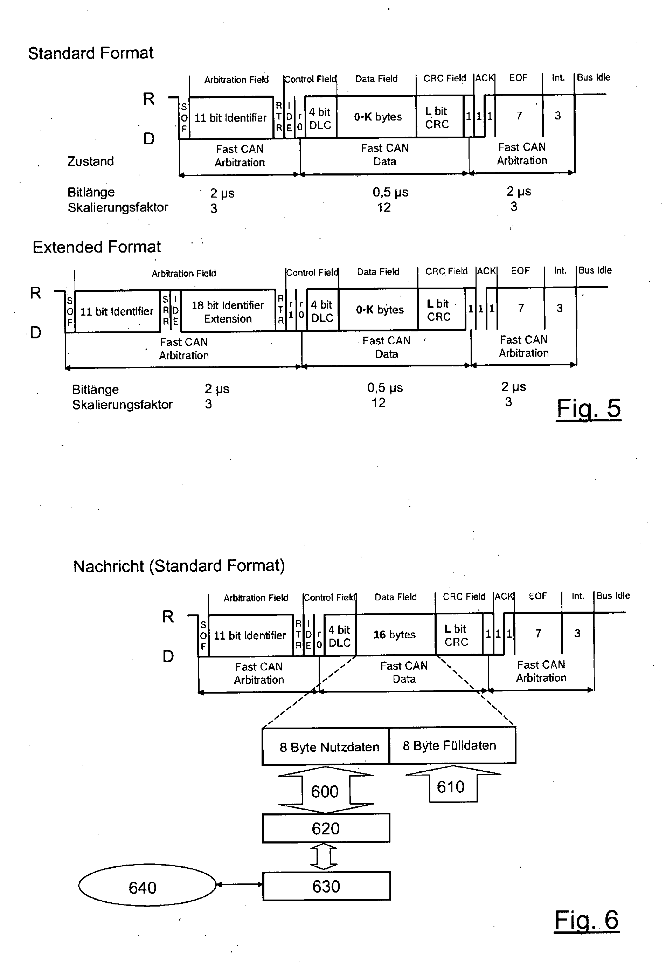

Figur 5 zeigt für weitere Ausführungsbeispiele des erfindungsgemäßen Übertragungsverfahrens nochmals die Struktur von Nachrichten in den zwei möglichen Varianten, dem Standard Format und dem Extended Format. Für beide Varianten sind in Figur 5 Bereiche eingezeichnet, in denen zwischen zwei Zuständen, hier bezeichnet mit Fast-CAN-Arbitration und Fast-CAN-Data umgeschaltet wird. Diese Umschaltung zwischen den beiden Zuständen bewirkt in diesem Beispiel, dass nach Abschluss der Arbitrierung für einen Teil der Nachricht, insbesondere für das Datenfeld und das CRC Feld, die Bitlängen verkürzt und somit die einzelnen Bits schneller über den Bus übertragen werden. Dadurch kann die Übertragungszeit für eine Nachricht gegenüber dem normgemäßen Verfahren verkürzt werden. Der zugehörige Wechsel der zeitlichen Bitlänge kann beispielsweise durch Verwendung mindestens zweier unterschiedlicher Skalierungsfaktoren zur Einstellung der Bus-Zeiteinheit relativ zu einer kleinsten Zeiteinheit oder dem Oszillatortakt im laufenden Betrieb realisiert werden. Die Umschaltung der Bitlänge, sowie die entsprechende Veränderung des Skalierungsfaktors sind in Figur 5 ebenfalls beispielhaft dargestellt.

Der Übergang zwischen den Zuständen Fast-CAN-Arbitration und Fast-CAN-Data kann abhängig von einer weiteren Umschaltbedingung erfolgen, welche mit einer Kennzeichnung der Nachrichten korrespondiert, die den Teilnehmern der Datenübertragung signalisiert, dass die verkürzte Bitlänge angewendet wird. In dem hier dargestellten Ausführungsbeispiel ist die gewählte Position dieser Kennzeichnung das "reserved bit" r0, das vor dem Data Length Code übertragen wird. Sie entspricht also einer möglichen Position der ersten Kennzeichnung, welche zur ersten Umschaltbedingung korrespondiert und die mögliche Verwendung längerer Datenfelder und einer geänderten Interpretation des Data Length Code kennzeichnet, und auch der dritten Kennzeichnung, welche zu einer geänderten CRC Berechnung korrespondiert.

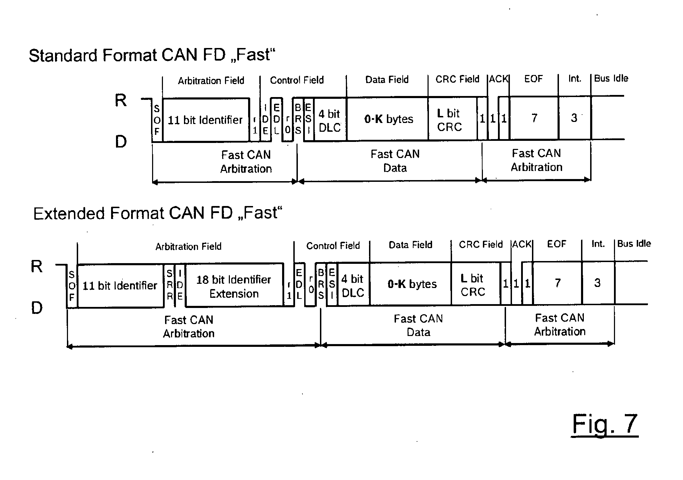

Eine andere Möglichkeit zur Kennzeichnung der erfindungsgemäßen Nachrichten mit verkürzter Bitlänge ist in Figur 7 dargestellt. Hier sind die Nachrichten mit potenziell längeren Datenfeldern (zugehörig: erste Kennzeichnung) und geänderter CRC-Berechung (zugehörig: dritte Kennzeichnung) durch ein rezessives EDL-Bit (Extended Data Length) gekennzeichnet, welches an die Stelle eines in Norm CAN Nachrichten dominant übertragenen Bits tritt und dieses Bit ersetzt oder um eine Position nach hinten verschiebt. Für die Standard-Adressierung tritt das EDL-Bit an die zweite Position im Control Field und verschiebt das dort befindliche, stets dominanten r0-Bit um eine Position. Für die Extended Adressierung tritt das EDL-Bit im gezeigten Beispiel an die erste Position des Control Field und ersetzt das dort befindliche reservierte r1-Bit, das im Norm-CAN stets dominant übertragen wird. Die vierte Kennzeichnung, die die Verwendung der verkürzten Bitlänge ankündigt, ist durch das Einfügen eines zusätzlichen, rezessiven BRS-Bits (Bit Rate Switch) in das Control Field von erfindungsgemäßen Nachrichten, welche durch das EDL-Bit gekennzeichnet sind, dargestellt. In dem hier dargestellten Ausführungsbeispiel ist die Position des BRS-Bits die vierte (Standard Adressierung) bzw. dritte (Extended Adressierung) Position im Control Field.

Die Nachrichten tragen die Bezeichnung "CAN FD Fast". Für die zwei möglichen Adressierungsvarianten von Nachrichten, das Standard Format und das Extended Format, sind in Figur 7 Bereiche eingezeichnet, in denen zwischen zwei Zuständen, bezeichnet mit Fast-CAN-Arbitration und Fast-CAN-Data umgeschaltet wird. Diese Umschaltung zwischen den beiden Zuständen bewirkt, wie bereits geschildert, dass für den entsprechenden Teil der Nachricht die Bitlängen verkürzt und somit die einzelnen Bits schneller über den Bus übertragen werden. Dadurch kann die Übertragungszeit für eine Nachricht gegenüber dem normgemäßen Verfahren verkürzt werden. Der Übergang zwischen den Zuständen Fast-CAN-Arbitration und Fast-CAN-Data erfolgt in Nachrichten, welche die erste bzw. dritte Kennzeichnung EDL aufweisen, abhängig von der weiteren Kennzeichnung BRS, die den Teilnehmern der Datenübertragung signalisiert, dass die verkürzte Bitlänge angewendet wird

In dem dargestellten Fall, in dem also auf die erste Kennzeichnung EDL die zweite Kennzeichnung BRS folgt, werden im erfindungsgemäßen Übertragungsverfahren Nachrichten übertragen, deren Bitlänge deutlich verkürzt, deren Datenfeldgröße auf Werte oberhalb 8 Byte ausdehnbar, und deren CRC an das größere Datenfeld angepasst ist. Erhebliche Steigerung der Übertragungskapazität über das Bussystem bei gleichzeitig verbesserter Übertragungssicherheit werden so erreicht.

Die schnellere Übertragung beginnt im dargestellten Beispiel unmittelbar nach Versenden der zugehörigen Kennzeichnung und wird unmittelbar nach Erreichen des für die Rückumschaltung festgelegten Bits beendet oder dann, wenn ein Grund zum Start eines Error-Frames erkannt wurde.

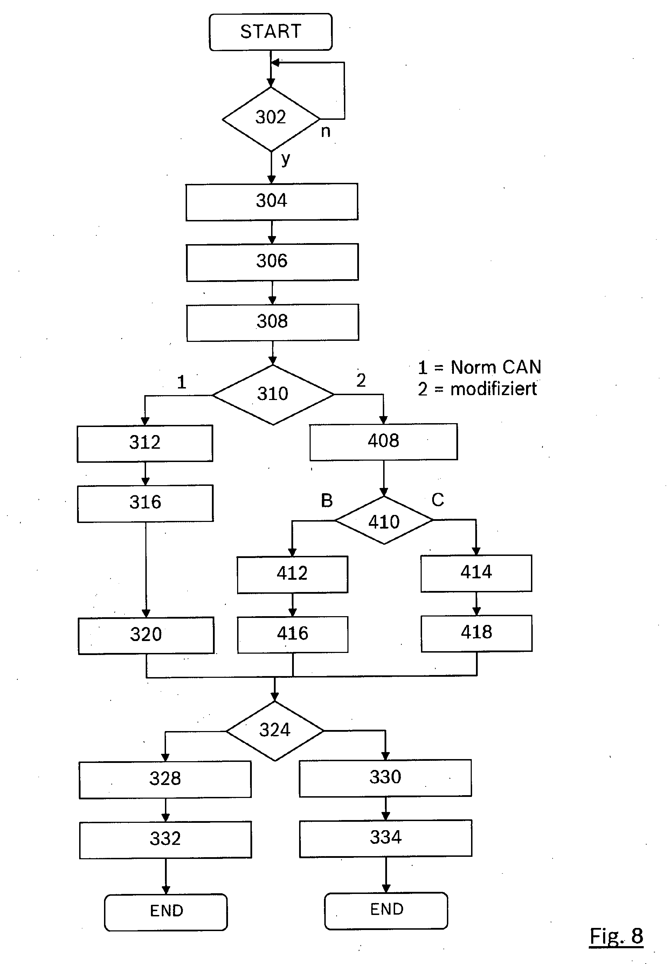

Figur 8 zeigt einen gegenüber Figur 3 modifizierten Empfangsprozess, bei welchem zusätzlich abhängig von der zweiten Kennzeichnung BRS zwischen den Zuständen Fast-CAN-Arbitration und Fast-CAN-Data umgeschaltet wird. Liegt bei der Verzweigung 310, beispielsweise nach Empfang des zweiten Bits des Control Field als rezessivem Bit EDL, die Information vor, dass das erfindungsgemäß modifizierte Kommunikationsverfahren anzuwenden ist, so werden im Block 408 die nächsten Bits des Control Field eingelesen. Wird das zur zweiten Kennzeichnung dienende Bit, beispielsweise das vierte Bit BRS des erfindungsgemäß erweiterten Control Field, mit dem vorgesehenen Wert, beispielsweise rezessiv, empfangen, so wird beispielsweise am Sample Point dieses Bits der Zustand Fast-CAN-Data eingenommen, also auf die verkürzte Bitlänge umgeschalten (Pfad "C"). Weist das betreffende Bit den umgekehrten Wert auf, also in diesem Beispiel dominant, so erfolgt keine Verkürzung der Bitlänge (Pfad "B"). In den Blöcken 412 beziehungsweise 414 erfolgt der Empfang der verbleibenden Bits des Control Field inklusive des Data Length Code und der Empfang des Datenfeldes gemäß der Größeninformation aus dem Data Length Code. Im Block 412 wird mit normaler Bitlänge empfangen, im Block 414 mit der verkürzten Bitlänge. In den Blöcken 416 beziehungsweise 418 wird das erfindungsgemäß abweichende, insbesondere längere CRC Field eingelesen. Am letzten Bit des CRC Field, dem CRC Delimiter wird im Block 418 wieder in den Zustand Fast-CAN-Arbitration mit gewöhnlicher Bitrate umgeschalten. Anschließend wird bei der Verzweigung 324 analog zu Figur 3 geprüft, ob die vom Sender übermittelte und die vom Empfänger selbst ermittelte CRC Checksumme übereinstimmen und es wird abhängig davon weiter verfahren, wie schon in Figur 3.

Die schnellere Übertragung beginnt beispielsweise unmittelbar nach Versenden der zugehörigen Kennzeichnung und wird unmittelbar nach Erreichen des für die Rückumschaltung festgelegten Bits beendet oder dann, wenn ein Grund zum Start eines Error-Frames erkannt wurde.

Das Verfahren eignet sich im normalen Betrieb eines Kraftfahrzeuges zur Übertragung von Daten zwischen wenigstens zwei Steuergeräten des Kraftfahrzeuges, welche über einen geeigneten Datenbus verbunden sind. Es ist aber gleichermaßen vorteilhaft einsetzbar während der Fertigung oder Wartung eines Kraftfahrzeuges zur Übertragung von Daten zwischen einer zum Zwecke der Programmierung mit einem geeigneten Datenbus verbundenen Programmierungseinheit und wenigstens einem Steuergerät des Kraftfahrzeuges, welches mit dem Datenbus verbunden ist.

Weiterhin ist es auch möglich, das Verfahren in der industriellen Automatisierung einzusetzen, also beispielsweise zur Übertragung von Steuerinformation zwischen verteilten, durch den Bus miteinander verbundenen Steuereinheiten, die den Ablauf eines industriellen Fertigungsablaufes steuern. In diesem Umfeld können auch sehr lange Busleitungen auftreten und es kann besonders sinnvoll sein, das Bussystem für die Arbitirierungsphase mit einer relativ langen Bitlänge zu betreiben, beispielsweise mit 16, 32 oder 64 Mikrosekunden, so dass die Bussignale sich während des Arbitirierungsvorganges wie erforderlich auf dem gesamten Bussystem ausbreiten können. Anschließend kann dann für einen Teil der Nachricht, wie beschrieben, auf kürzere Bitlängen umgeschalten werden, um die mittlere Übertragungsrate nicht zu klein werden zu lassen.

Insgesamt stellt das Verfahren ein Übertragungsverfahren dar, welches sich dadurch auszeichnet, dass ein Norm-CAN Controller nur minimal geändert werden muss, um erfindungsgemäß arbeiten zu können. Ein erfindungsgemäßer Kommunikationscontroller, der auch als Norm-CAN Controller arbeiten kann, ist nur unwesentlich größer als ein herkömmlicher Norm-CAN Controller. Das zugehörige Anwendungs-Programm muss nicht geändert werden, und schon dann werden Vorteile in der Geschwindigkeit der Datenübertragung erzielt. Durch Verwendung der erweiterten Größe des Datenfeldes und der zugehörigen DLC und CRC kann die Geschwindigkeit der Datenübertragung weiter gesteigert werden, die Anpassungen in der Anwendungs-Software sind minimal. Es können weite Teile des CAN-Conformance-Tests (ISO 16845) übernommen werden. Es ist auch möglich, das erfindungsgemäße Übertragungsverfahren mit den Ergänzungen des TTCAN (ISO 11898-4) zu kombinieren.

Zumindest für bestimmte Anwendungszwecke oder in einer Einführungsphase ist es sinnvoll, für das erfindungsgemäße Datenübertragungsverfahren und die Vorrichtungen, welche es ausführen, eine Variante vorzusehen, welche sich vollständig oder weitgehend kompatibel hinsichtlich der verwendeten Anwendungs-Software verhält Diese Anwendungs-Software kann beispielsweise die Regelungs-Software eines elektronischen Stabilitätsprogrammes für Kraftfahrzeuge oder die Ansteuerungs-Software für einen Verbrennungsmotor eines Kraftfahrzeuges sein: Die Anwendungs-Software unterliegt insbesondere für sicherheitskritische Systeme umfangreichen Absicherungsprogrammen und es ist daher vorteilhaft, die Einführung von erfindungsgemäß geänderten Datenübertragungsvorrichtungen bei unveränderter Anwendungs-Software durchführen zu können.

Die Weitergabe von Daten zwischen dem Datenfeld einer Nachricht und der Anwendungs-software erfolgt in Kommunikationscontrollern über einen für diese Verwendung vorgesehenen Zwischenspeicher, der im Norm-CAN eine vorgegebene Größe von beispielsweise acht Byte aufweist, und einen zugehörigen Nachrichtenspeicher. Mit Zwischenspeicher und Nachrichtenspeicher kann im Zusammenhang mit der vorliegenden Erfindung auch ein für die entsprechende Verwendung zugewiesener Bereich innerhalb einer größeren Speichereinheit gemeint sein.

Dementsprechend werden in Systemen, welche eine Datenübertragung per Norm-CAN durchführen, von der Anwendungs-Software Datenpakete von höchstens acht Byte Größe über meistens zahlreiche Nachrichtenspeicher und Zwischenspeicher mit dem Datenfeld von CAN-Nachrichten ausgetauscht. Bleibt die Anwendungs-Software unverändert, so kann man auch die Nachrichtenspeicher und Zwischenspeicher bei der vorgegebene Größe von beispielsweise acht Byte belassen, um die Größe beziehungsweise Chipfläche des erfindungsgemäßen Kommunikationscontrollers nicht unnötig zu erhöhen. Wenn die Größe des Datenfeldes einer erfindungsgemäßen Nachricht (beispielsweise 16 Byte) sich nun von der Größe des verwendeten Zwischenspeichers (beispielsweise acht Byte) unterscheidet, ist es notwendig, das Protokoll-Steuerwerk des Kommunikationscontrollers entsprechend der Größendifferenz zwischen Datenfeld und Zwischenspeicher anzupassen.

Ein weiteres, in Figur 6 am Beispiel einer Nachricht im Standard Format mit einem Datenfeld von 16 Byte Größe illustriertes Ausführungsbeispiel des erfindungsgemäßen Datenübertragungsverfahrens sieht daher vor, dass bezüglich der seriellen Übertragung von Bits über den Bus die volle Funktionalität des Verfahrens ausgeführt wird, dass jedoch lediglich acht Bytes an relevanten Nutzdaten im Datenfeld übertragen werden. Während also bei entsprechendem Vorliegen einer Umschaltbedingung über den Bus beispielsweise eine Nachricht mit einem Datenfeld von 16 Byte Größe und einer zugehörigen Kennzeichnung übertragen wird und die Nachricht durch ein entsprechend angepasstes CRC-Polynom auf korrekte Übertragung geprüft wird, werden an die Anwendungs-Software 640 über den Zwischenspeicher 620 und beispielsweise einen Nachrichtenspeicher 630 im erfindungsgemäßen Kommunikationscontroller lediglich acht Bytes an Nutzdaten übergeben. Im Sendefall werden von der Anwendungs-Software 640 acht Bytes Nutzdaten beispielsweise über einen weiteren oder denselben Nachrichtenspeicher 630 in den Zwischenspeicher 620 geschrieben, welche nach einem vorgegebenen oder vorgebbaren Verfahren in das beispielsweise 16 Byte große Datenfeld der zu versendenden Nachricht eingetragen werden. Natürlich ist es auch möglich, das Verfahren auf eine von acht Byte abweichende Größe des Zwischenspeichers zu beschränken, beispielsweise sechs oder vier Bytes. Dies ist vor allem dann sinnvoll, wenn die Anwendungs-Software ebenfalls diese Beschränkung vorsieht. Auch die Wahl der Größe des Datenfeldes von 16 Byte ist nur beispielhaft zu verstehen und kann beispielsweise auch Werte von 24, 32 oder 64 Byte umfassen. Zahlreiche andere Möglichkeiten sind etwa der Figur 2 zu entnehmen. Es besteht eine Beziehung zwischen der Menge an Daten, welche aus der Nachricht an die Anwendungs-Software übergeben wird beziehungsweise von der Anwendungs-Software zum Eintragen in das Datenfeld der Nachricht bereitgestellt werden, und der Größe des Zwischenspeichers 620.

Das Protokoll-Steuerwerk des Kommunikationscontrollers platziert in diesem Ausführungsbeispiel, wie in Figur 6 durch den Doppelpfeil 600 symbolisiert, bei der Serialisierung der zu übertragenden Daten beispielsweise die acht Nutzdaten-Bytes aus dem Zwischenspeicher 620 in den ersten acht seriellen Bytes des Datenfeldes und füllt die weiteren Bits des Datenfeldes, wie in Figur 6 durch den Pfeil 610 dargestellt, mit vorgegebenen, vorgebbaren oder auch beliebigen Fülldaten auf, beispielsweise mit einem bestimmten Bit-Muster. Es ist sinnvoll, dass hierbei eine Bitfolge verwendet wird, welche nicht zu einem Einfügen zusätzlicher Stuff-Bits nach den Regeln der CAN-Norm ISO 11898-1 führt, da sonst das Datenfeld unnötig vergrößert wird. Es kann also beispielsweise für jedes ungenutzte Byte des Datenfeldes eine Bitfolge 0b00110011 oder 0b11001100 eingefügt werden.

Es ist auch möglich, dass die beispielsweise acht Nutzdaten-Bytes des Zwischenspeichers 620 nicht in den ersten acht Bytes des Datenfeldes, sondern an einer anderen Position oder in mehreren anderen Bereichen innerhalb des Datenfeldes eingetragen werden. Die Position der Nutzdaten-Bytes muss lediglich für die Busteilnehmer einheitlich vorgegeben oder vorgebbar sein.

Die empfangenden Busteilnehmer lesen die Nachricht gemäß dem erfindungsgemäßen Verfahren, führen beispielsweise die CRC-Prüfung durch und bestätigen korrekten Empfang durch Acknowledge. Das Protokoll-Steuerwerk im Kommunikationscontroller der empfangenden Busteilnehmer setzt die seriell empfangenen Bits der Nachricht um und extrahiert aus den beispielsweise 16 Byte des Datenfeldes dabei die acht Bytes an Nutzdaten, welche in den Zwischenspeicher 620 geschrieben werden. Dies ist in Figur 6 ebenfalls durch den Doppelpfeil 600 symbolisiert. Die restlichen Fülldaten werden verworfen. An die Anwendungs-Software 640 werden also lediglich die acht Byte Nutzdaten über den Zwischenspeicher 620 und beispielsweise den Nachrichtenspeicher 630 übergeben. Die Anwendungs-Software 640 stellt selbst keinen Unterschied im Vergleich zur Verwendung des normgemäßen Übertragungsverfahrens fest.

Zur fehlersicheren Implementierung der verschiedenen Ausführungsformen des erfindungsgemäßen Datenübertragungsverfahrens, also insbesondere der Verfahren mit in Teilbereichen der Nachricht verkürzter Bitlänge, mit geänderter Länge des Datenfeldes und modifizierter, eventuell auch mehrstufig modifizierter Interpretation des Inhaltes des Data Length Code, mit Verwendung unterschiedlicher CRC-Checksummen oder auch mit Anpassung der weitergegebenen Datenmange an die Größendifferenz zwischen Datenfeld und Zwischenspeicher, sind weitere Ergänzungen sinnvoll.

Durch geeignete Statusregister wird beispielsweise im Norm-CAN gewährleistet, dass das Erreichen eines Fehler-Status (Error-Warning, Error-Passive, Bus-Off), welcher bei einer entsprechenden Häufung von Fehlern in der Datenübertragung eingenommen wird, beispielsweise durch den Mikrocontroller beziehungsweise die Anwendungs-Software abgelesen werden kann. Weiterhin werden erfolgreiche Sende- und Empfangsvorgänge durch Flags signalisiert (TxOK, RxOK) und es wird eine Information über das jeweils letzte Busereignis bereitgehalten (LEC, Last Error Code). Einige oder alle dieser Informationen können in erfindungsgemäßen Kommunikationscontrollern in dafür vorgesehenen Speicherbereichen mehrfach vorgehalten werden, so dass beispielsweise durch den zugehörigen Mikrocontroller beziehungsweise die darauf ablaufende Anwendungs-Software die jeweilige Information je nach aktuell ausgeführtem Datenübertragungsverfahren separat erfasst und abgespeichert werden kann. Dadurch kann festgestellt werden, ob bei einem gegenüber der CAN-Norm modifizierten Übertragungsverfahren, beispielsweise einem längeren Datenfeld oder eine kürzeren Bitlänge in Bereichen der Nachricht, ein bestimmtes Fehlerbild häufiger auftritt, als dies im Norm-CAN-Übertragungsverfahren der Fall ist.

Es kann ein zusätzlicher Fehler-Status eingeführt und durch ein Status-Bit signalisiert werden, der bei Fehlerhäufung im modifizierten Übertragungsmodus die Datenübertragung permanent in das Norm-CAN-Übertragungsverfahren zurückschaltet. Es können die Informationen TxOK, RxOK und LEC separat für die verschiedenen Datenübertragungsverfahren erfasst werden. Es kann alternativ für den LEC die Information zusätzlich abgelegt werden, in welchem Übertragungsmodus der Fehler auftrat.

Weiterhin kann es sinnvoll sein, für empfangene Nachrichten festzuhalten, nach welchem Verfahren und mit welcher der möglichen Kennzeichnungen sie empfangen wurden und für zu sendende Nachrichten individuell festzulegen, nach welchem Verfahren und mit welcher Kennzeichnung sie versendet werden sollen. Bestimmte oder alle Empfangs-Nächrichtenspeicher und / oder Zwischenspeicher können hierzu mit einer Anzahl von zusätzlichen Bits ergänzt werden, welche zu den möglichen Kennzeichnungen korrespondieren. Es kann auch in weiteren dafür vorgesehenen Bits die Information separat abgelegt werden, in welchem Zustand beziehungsweise unter welcher Umschaltbedingung die jeweilige Nachricht empfangen wurde. Analog können auch bestimmte oder alle Sende-Nachrichtenspeicher und / oder Zwischenspeicher mit zusätzlichen Bits versehen werden, in welche eingetragen wird, dass die jeweilige Nachricht in einem modifizierten Verfahren und / oder mit einer entsprechenden Kennzeichnung versendet werden soll.

Schließlich kann es sinnvoll sein, einen erfindungsgemäßen Kommunikationscontroller so auszulegen, dass er durch eine geeignete Umkonfiguration zwischen dem Anwendungs-Software-kompatiblen Modus mit eine Begrenzung der zwischen Datenfeld der Nachricht und Anwendungs-Software weitergegebenen Datenmenge auf beispielsweise 8 Byte und einem Datenübertragungs-optimierten Modus mit Nutzung der vollen Größe des Datenfeldes unter Nutzung eines entsprechend großausgelegten verwendeten Zwischenspeichers umgeschaltet werden kann. In diesem Fall kann zwar nicht die entsprechende Einsparung bei Größe beziehungsweise Chipfläche durch Verwendung entsprechend kleinerer Zwischenspeicher und / oder Nachrichtenspeicher erzielt werden, der Kommunikationscontroller ist jedoch sehr flexibel in Busteilnehmern, welche eine bestehende Anwendungs-Software weiternutzen und auch in Busteilnehmern, für welche eine neue, Datenübertragungs-optimierte Software erstellt wurde, einsetzbar.

Dieser umschaltbare Kommunikationscontroller sollte dann auch seinen aktuell genutzten Modus, also den Anwendungs-Softwäre-kompatiblen Modus oder den Datenübertragungs-optimierten Modus, in einem hierfür vorgesehenen Speicherbereich beispielsweise durch ein entsprechendes Status-Bit sichtbar machen.

Wo in der vorangegangenen Beschreibung der Erfindung auf ISO-Standards Bezug genommen wurde, istjeweils die zum Anmeldezeitpunkt geltende Fassung des entsprechenden ISO-Standards als Stand der Technik zugrundezulegen.

## Patentansprüche

1. Verfahren zur seriellen Datenübertragung in einem Bussystem mit mindestens zwei teilnehmenden Datenverarbeitungseinheiten, die über den Bus Nachrichten austauschen,
wobei die gesendeten Nachrichten einen logischen Aufbau gemäß der CAN-Norm ISO 11898-1 aufweisen,
wobei der logische Aufbau ein Start-of-Frame-Bit, ein Arbitration Field, ein Control Field, ein Data Field, ein CRC Field, ein Acknowledge Field und eine End-of-Frame Sequenz umfasst,
wobei das Control Field einen Data Length Code umfasst, der eine Information über die Länge des Data Fields enthält,
**dadurch gekennzeichnet, dass** bei Vorliegen einer ersten Umschaltbedingung das Datenfeld der Nachrichten abweichend von der CAN-Norm ISO 11898-1 mehr als acht Bytes umfassen kann,
wobei zur Feststellung der Größe des Datenfeldes bei Vorliegen der ersten Umschaltbedingung die Werte des Data Length Codes zumindest teilweise abweichend von der CAN-Norm ISO 11898-1 interpretiert werden,
wobei für die Weitergabe von Daten zwischen dem Datenfeld und der Anwendungs-Software (640) wenigstens ein Zwischenspeicher (620) vorgesehen ist und die weitergegebene Datenmenge zumindest, wenn die Größe des Datenfeldes sich von der Größe des verwendeten Zwischenspeichers (620) unterscheidet, entsprechend der Größendifferenz zwischen Datenfeld und verwendetem Zwischenspeicher (620) angepasst wird.

2. Verfahren nach Anspruch 1,
**dadurch gekennzeichnet, dass** aus dem Datenfeld einer über den Bus empfangenen Nachricht eine der Größe des Zwischenspeichers entsprechende Datenmenge nach einem vorgegebenen oder vorgebbaren Auswahlverfahren ausgewählt und an den Zwischenspeicher weitergegeben wird, wenn die Größe des Datenfeldes über der Größe des verwendeten Zwischenspeichers liegt.

3. Verfahren nach Anspruch 1 oder 2,
**dadurch gekennzeichnet, dass** in das Datenfeld einer über den Bus zu sendenden Nachricht der Inhalt des Zwischenspeichers in wenigstens einen vorgegebenen oder vorgebbaren Bereich des Datenfeldes der Nachricht eingetragen und der oder die verbleibenden Bereiche des Datenfeldes nach einem vorgegebenen oder vorgebbaren Verfahren aufgefüllt werden, wenn die Größe des Datenfeldes über der Größe des verwendeten Zwischenspeichers liegt.

4. Verfahren nach einem der Ansprüche 1 bis 3,
**dadurch gekennzeichnet, dass** bei einer Größe des Datenfeldes einer über den Bus empfangenen Nachricht von mehr als acht Bytes über den wenigstens einen Zwischenspeicher acht vorgegebene oder vorgebbare Bytes des Datenfeldes an die Anwendungs-Software übergeben werden.

5. Verfahren nach einem der Ansprüche 1 bis 4,
**dadurch gekennzeichnet, dass** bei einer Größe des Datenfeldes einer über den Bus zu sendenden Nachricht von mehr als acht Bytes die verbleibenden Bits des Datenfeldes mit vorgegebenen oder vorgebbaren Werten aufgefüllt werden.

6. Verfahren nach einem der Ansprüche 3 bis 5,
**dadurch gekennzeichnet, dass** die Bits in den aufgefüllten Bereichen des Datenfeldes einer über den Bus zu sendenden Nachricht so aufgefüllt werden, dass gemäß den Regeln des CAN-Norm ISO 11898-1 in diesen Bereichen keine Stuff-Bits eingefügt werden müssen.

7. Verfahren nach einem der Ansprüche 1 bis 6,
**dadurch gekennzeichnet, dass** in Abhängigkeit vom Wert der ersten Umschaltbedingung jede der möglichen Wertekombinationen der vier Bits des Data Length Code einer der zulässigen Größen des Datenfeldes zugeordnet ist.

8. Verfahren nach einem der Ansprüche 1 bis 7,
**dadurch gekennzeichnet, dass** die Nachrichten, in denen das Datenfeld der Nachrichten abweichend von der CAN-Norm ISO 11898-1 mehr als acht Bytes umfassen kann und zur Feststellung der Größe des Datenfeldes die Werte des Data Length Codes zumindest teilweise abweichend von der CAN-Norm ISO 11898-1 interpretiert werden, durch eine erste Kennzeichnung im Arbitration Field und/oder im Control Field von CAN-normgemäßen Nachrichten unterscheidbar sind.

9. Verfahren nach einem der Ansprüche 1 bis 8,
**dadurch gekennzeichnet, dass** die erste Kennzeichnung in den teilnehmenden Datenverarbeitungseinheiten zur Ermittlung der ersten Umschaltbedingung ausgewertet wird, so dass abhängig von der ersten Umschaltbedingung der Empfangsprozess an die Größe des Datenfeldes angepasst wird.

10. Verfahren nach einem der Ansprüche 8 bis 9,
**dadurch gekennzeichnet, dass** die erste Kennzeichnung durch ein erstes Kennzeichen-Bit (EDL) erfolgt, dessen Position zwischen dem letzten Bit des Identifiers und dem ersten Bit des Data Length Code liegt und an dessen Position sich in Nachrichten gemäß der CAN-Norm ISO 11898-1 ein Bit mit einem festgelegten Wert befindet.

11. Verfahren nach einem der Ansprüche 1 bis 10,
**dadurch gekennzeichnet, dass** in Abhängigkeit vom Wert einer Umschaltbedingung das CRC Field der Nachrichten wenigstens zwei unterschiedliche Anzahlen von Bits aufweisen kann, wobei wenigstens eine der gültigen Anzahlen von Bits im CRC Field eine von der CAN-Norm ISO 11898-1 abweichende Anzahl von Bits ist,
wobei zur Festlegung des Inhaltes eines solchen CRC Field, welches eine abweichende Anzahl von Bits aufweist, ein von der CAN-Norm ISO 11898-1 abweichendes Generator-Polynom verwendet wird.

12. Verfahren nach einem der Ansprüche 1 bis 11,
**dadurch gekennzeichnet, dass** in Abhängigkeit vom Wert einer weiteren Umschaltbedingung die zeitliche Bitlänge innerhalb einer Nachricht mindestens zwei unterschiedliche Werte annehmen kann, wobei für wenigstens einen ersten vorgebbaren Bereich innerhalb der Nachricht die zeitliche Bitlänge größer oder gleich einem vorgegebenen Minimalwert von etwa einer Mikrosekunde ist und in mindestens einem zweiten vorgebbaren Bereich innerhalb der Nachricht die zeitliche Bitlänge eine im Vergleich zum ersten Bereich reduzierten Wert aufweist.

13. Verfahren nach Anspruch 12,
**dadurch gekennzeichnet, dass** die mindestens zwei unterschiedlichen Werte der zeitlichen Bitlänge innerhalb einer Nachricht durch Verwendung mindestens
zweier unterschiedlicher Skalierungsfaktoren zur Einstellung der Bus-Zeiteinheit relativ zu einer kleinsten Zeiteinheit oder dem Oszillatortakt im laufenden Betrieb realisiert werden.

14. Verfahren nach Anspruch 12 oder 13,
**dadurch gekennzeichnet, dass** die Nachrichten, in denen in Abhängigkeit vom Wert einer weiteren Umschaltbedingung die zeitliche Bitlänge innerhalb einer Nachricht mindestens zwei unterschiedliche Werte annehmen kann, durch eine weitere Kennzeichnung im Arbitration Field und / oder im Control Field erkennbar sind, wobei die weitere Kennzeichnung mit der ersten Kennzeichnung übereinstimmen kann.

15. Verfahren nach Anspruch 14,
**dadurch gekennzeichnet, dass** der Wert der weiteren Umschaltbedingung in den teilnehmenden Datenverarbeitungseinheiten in Abhängigkeit von der weiteren Kennzeichnung ermittelt wird oder mit der ersten Umschaltbedingung übereinstimmt oder aus der ersten Umschaltbedingung abgeleitet wird, wobei abhängig vom Wert der weiteren Umschaltbedingung der Empfangsprozess an die unterschiedlichen Werte der Bitlänge innerhalb einer Nachricht angepasst wird.

16. Verfahren nach einem der Ansprüche 14 bis 15,
**dadurch gekennzeichnet, dass** die weitere Kennzeichnung durch ein weiteres Kennzeichen-Bit (BRS) erfolgt, welches zwischen dem ersten Kennzeichen-Bit und dem ersten Bit des Data Length Code liegt.

17. Verfahren nach einem der Ansprüche 1 bis 16,
**dadurch gekennzeichnet, dass** wenigstens ein zusätzliches Status-Bit vorgesehen ist, durch welches für die Anwendungs-Software Informationen, die sich auf das von der CAN-Norm ISO 11898-1 abweichende Datenübertragungsverfahren beziehen, bereitgestellt werden.

18. Verfahren nach Anspruch 17,
**dadurch gekennzeichnet, dass** das wenigstens eine zusätzliche Status-Bit ein Status-Bit zur Mitteilung des erfolgreichen Sendens und / oder ein Status-Bit zur Mitteilung des erfolgreichen Empfangs und / oder ein oder mehrere Status-Bits zur Mitteilung der Art des zuletzt aufgetretenen Fehlers umfasst.

19. Verfahren nach Anspruch 17 oder 18,
**dadurch gekennzeichnet, dass** abhängig von der Häufigkeit des Auftretens von Fehlern in einem von der CAN-Norm ISO 11898-1 abweichenden Datenübertragungsverfahren in das Übertragungsverfahren gemäß CAN-Norm ISO 11898-1 zurückgeschaltet wird und wenigstens ein Status-Bit zur Mitteilung der erfolgten Rückumschaltung vorgesehen ist.

20. Verfahren nach einem der Ansprüche 1 bis 19,
**dadurch gekennzeichnet, dass** in dem wenigstens einen Zwischenspeicher und / oder wenigstens einem zugeordneten Nachrichtenspeicher wenigstens ein zusätzliches Nachrichten-Bit vorgesehen ist, welches das für die jeweilige Nachricht verwendete oder zu verwendende Verfahren zur Datenübertragung kennzeichnet.

21. Verfahren nach Anspruch 20,
**dadurch gekennzeichnet, dass** das wenigstens eine zusätzliche Nachrichten-Bit wenigstens einem der Werte der ersten oder weiteren Kennzeichnung entspricht oder aus deren Werten abgeleitet wird oder wenigstens einem der Werte der Bits r1 oder r0 des Control Field oder SRR des Arbitration Field entspricht.

22. Vorrichtung zur seriellen Datenübertragung in einem Bussystem mit mindestens zwei teilnehmenden Datenverarbeitungseinheiten, die über den Bus Nachrichten austauschen,
wobei die gesendeten Nachrichten einen logischen Aufbau gemäß der CAN-Norm ISO 11898-1 aufweisen,
wobei der logische Aufbau ein Start-of-Frame-Bit, ein Arbitration Field, ein Control Field, ein Data Field, ein CRC Field, ein Acknowledge Field und eine End-of-Frame Sequenz umfasst,
wobei das Control Field einen Data Length Code umfasst, der eine Information über die Länge des Data Fields enthält,
**dadurch gekennzeichnet, dass** bei Vorliegen einer ersten Umschaltbedingung das Datenfeld der Nachrichten abweichend von der CAN-Norm ISO 11898-1 mehr als acht Bytes umfassen kann,
wobei zur Feststellung der Größe des Datenfeldes bei Vorliegen der ersten Umschaltbedingung die Werte des Data Length Codes zumindest teilweise abweichend von der CAN-Norm ISO 11898-1 interpretiert werden,
wobei für die Weitergabe von Daten zwischen dem Datenfeld und der Anwendungs-Software wenigstens ein Zwischenspeicher vorgesehen ist und die weitergegebene Datenmenge zumindest, wenn die Größe des Datenfeldes sich von der Größe des verwendeten Zwischenspeichers unterscheidet, entsprechend der Größendifferenz zwischen Datenfeld und verwendetem Zwischenspeicher angepasst wird.

23. Vorrichtung nach Anspruch 22,
**dadurch gekennzeichnet, dass** die Vorrichtung durch geeignete Mittel dafür eingerichtet ist, zumindest eines der Verfahren zur Datenübertragung gemäß Anspruch 2 bis 21 auszuführen.

24. Vorrichtung nach Anspruch 23,
**dadurch gekennzeichnet, dass** die geeigneten Mittel zumindest ein Protokoll-Steuerwerk zur Anpassung der zwischen dem Datenfeld und dem Zwischenspeicher weitergegebenen Datenmenge entsprechend der Größendifferenz zwischen Datenfeld und Zwischenspeicher umfassen.

25. Vorrichtung nach einem der Ansprüche 23 oder 24,
**dadurch gekennzeichnet, dass** die geeigneten Mittel zumindest ein zusätzliches oder erweitertes Statusregister umfassen, dessen Inhalt die Art und
/ oder den Erfolg und / oder das Ergebnis des jeweils verwendeten Datenübertragungsverfahrens kennzeichnet.

26. Vorrichtung nach einem der Ansprüche 23 bis 25,
**dadurch gekennzeichnet, dass** die geeigneten Mittel zumindest einen zusätzlichen oder erweiterten Nachrichtenspeicher und / oder Zwischenspeicher umfassen, in welchem wenigstens ein zusätzliches Nachrichten-Bit das für die jeweilige Nachricht verwendete oder zu verwendende Verfahren zur Datenübertragung kennzeichnet.

27. Verwendung des Verfahrens nach einem der Ansprüche 1 bis 21 im normalen Betrieb eines Kraftfahrzeuges oder einer industriellen Anlage zur Übertragung von Daten zwischen wenigstens zwei Steuergeräten des Kraftfahrzeuges oder der industriellen Anlage, welche über einen geeigneten Datenbus verbunden sind.

28. Verwendung des Verfahrens nach einem der Ansprüche 1 bis 21 während der Fertigung oder Wartung eines Kraftfahrzeuges oder einer industriellen Anlage zur Übertragung von Daten zwischen einer zum Zwecke der Programmierung mit einem geeigneten Datenbus verbundenen Programmierungseinheit und wenigstens einem Steuergerät des Kraftfahrzeuges oder der industriellen Anlage, welches mit dem Datenbus verbunden ist.

## Claims

1. Method for serially transmitting data in a bus system having at least two participating data processing units which interchange messages via the bus,
the transmitted messages having a logical structure according to the ISO 11898-1 CAN standard,
the logical structure comprising a start-of-frame bit, an arbitration field, a control field, a data field, a CRC field, an acknowledge field and an end-of-frame sequence,
the control field comprising a data length code containing an item of information relating to the length of the data field,
**characterized in that**, when a first changeover condition is present, the data field of the messages may comprise more than eight bytes in a manner differing from the ISO 11898-1 CAN standard,
in which case, in order to determine the size of the data field when the first changeover condition is present, the values of the data length code are interpreted in a manner at least partially differing from the ISO 11898-1 CAN standard,
in which case at least one buffer (620) is provided for the purpose of forwarding data between the data field and the application software (640), and, at least if the size of the data field differs from the size of the buffer (620) used, the forwarded data volume is adapted according to the size difference between the data field and the buffer (620) used.

2. Method according to Claim 1,
**characterized in that** a data volume corresponding to the size of the buffer is selected from the data field of a message received via the bus according to a predefined or predefinable selection process and is forwarded to the buffer if the size of the data field is above the size of the buffer used.

3. Method according to Claim 1 or 2,
**characterized in that** the content of the buffer is entered in the data field of a message to be transmitted via the bus in at least one predefined or predefinable area of the data field of the message and the remaining area(s) of the data field is/are filled according to a predefined or predefinable method if the size of the data field is above the size of the buffer used.

4. Method according to one of Claims 1 to 3,
**characterized in that**, if the data field of a message received via the bus has a size of more than eight bytes, eight predefined or predefinable bytes of the data field are transferred to the application software via the at least one buffer.

5. Method according to one of Claims 1 to 4,
**characterized in that**, if the data field of a message to be transmitted via the bus has a size of more than eight bytes, the remaining bits of the data field are filled with predefined or predefinable values.

6. Method according to one of Claims 3 to 5,
**characterized in that** the bits in the filled areas of the data field of a message to be transmitted via the bus are filled in such a manner that no stuff bits have to be inserted in these areas according to the rules of the ISO 11898-1 CAN standard.

7. Method according to one of Claims 1 to 6,
**characterized in that** each of the possible value combinations of the four bits of the data length code is assigned to one of the permissible sizes of the data field depending on the value of the first changeover condition.

8. Method according to one of Claims 1 to 7,
**characterized in that** the messages, in which the data field of the messages may comprise more than eight bytes in a manner differing from the ISO 11898-1 CAN standard and, in order to determine the size of the data field, the values of the data length code are interpreted in a manner at least partially differing from the ISO 11898-1 CAN standard, can be distinguished from messages according to the CAN standard by a first identification in the arbitration field and/or in the control field.

9. Method according to one of Claims 1 to 8,
**characterized in that** the first identification is evaluated in the participating data processing units for the purpose of determining the first changeover condition, with the result that the receiving process is adapted to the size of the data field depending on the first changeover condition.

10. Method according to either of Claims 8 and 9,
**characterized in that** the first identification is effected by means of a first identification bit (EDL), the position of which is between the last bit of the identifier and the first bit of the data length code and at the position of which a bit having a fixed value is situated in messages according to the ISO 11898-1 CAN standard.

11. Method according to one of Claims 1 to 10,
**characterized in that** the CRC field of the messages may have at least two different numbers of bits depending on the value of a changeover condition, at least one of the valid numbers of bits in the CRC field being a number of bits differing from the ISO 11898-1 CAN standard,
in which case, in order to stipulate the content of such a CRC field which has a differing number of bits, a generator polynomial differing from the ISO 11898-1 CAN standard is used.

12. Method according to one of Claims 1 to 11,
**characterized in that** the temporal bit length inside a message may assume at least two different values depending on the value of a further changeover condition, the temporal bit length being greater than or equal to a predefined minimum value of approximately 1 microsecond for at least one first predefinable area inside the message, and the temporal bit length having a value reduced in comparison with the first area in at least one second predefinable area inside the message.

13. Method according to Claim 12,
**characterized in that** the at least two different values of the temporal bit length inside a message are implemented by using at least two different scaling factors for the purpose of setting the bus time unit relative to a smallest time unit or the oscillator clock during ongoing operation.

14. Method according to Claim 12 or 13,
**characterized in that** the messages in which the temporal bit length inside the message can assume at least two different values depending on the value of a further changeover condition can be identified by means of a further identification in the arbitration field and/or in the control field, the further identification being able to match the first identification.

15. Method according to Claim 14,
**characterized in that** the value of the further changeover condition is determined in the participating data processing units on the basis of the further identification or matches the first changeover condition or is derived from the first changeover condition, the receiving process being adapted to the different values of the bit length inside a message depending on the value of the further changeover condition.

16. Method according to either of Claims 14 and 15,
**characterized in that** the further identification is effected by means of a further identification bit (BRS) between the first identification bit and the first bit of the data length code.

17. Method according to one of Claims 1 to 16,
**characterized in that** at least one additional status bit is provided and is used to provide information relating to the data transmission method differing from the ISO 11898-1 CAN standard for the application software.

18. Method according to Claim 17,
**characterized in that** the at least one additional status bit comprises a status bit for communicating successful transmission and/or a status bit for communicating successful reception and/or one or more status bits for communicating the type of error which occurred last.

19. Method according to Claim 17 or 18,
**characterized in that**, depending on the frequency with which errors occur in a data transmission method differing from the ISO 11898-1 CAN standard, a switch is made back to the transmission method according to ISO 11898-1 CAN standard and at least one status bit for communicating the switch-back is provided.

20. Method according to one of Claims 1 to 19,
**characterized in that** the at least one buffer and/or at least one associated message memory contains at least one additional message bit which identifies the data transmission method used or to be used for the respective message.

21. Method according to Claim 20,
**characterized in that** the at least one additional message bit corresponds to at least one of the values of the first or further identification or is derived from the values of the latter or corresponds to at least one of the values of bit r1 or r0 of the control field or SRR of the arbitration field.

22. Apparatus for serially transmitting data in a bus system having at least two participating data processing units which interchange messages via the bus,
the transmitted messages having a logical structure according to the ISO 11898-1 CAN standard,
the logical structure comprising a start-of-frame bit, an arbitration field, a control field, a data field, a CRC field, an acknowledge field and an end-of-frame sequence,
the control field comprising a data length code containing an item of information relating to the length of the data field,
**characterized in that**, when a first changeover condition is present, the data field of the messages may comprise more than eight bytes in a manner differing from the ISO 11898-1 CAN standard,
in which case, in order to determine the size of the data field when the first changeover condition is present, the values of the data length code are interpreted in a manner at least partially differing from the ISO 11898-1 CAN standard,
in which case at least one buffer is provided for the purpose of forwarding data between the data field and the application software, and, at least if the size of the data field differs from the size of the buffer used, the forwarded data volume is adapted according to the size difference between the data field and the buffer used.

23. Apparatus according to Claim 22,
**characterized in that** the apparatus is set up, by means of suitable means, to carry out at least one of the data transmission methods according to Claims 2 to 21.

24. Apparatus according to Claim 23,
**characterized in that** the suitable means comprise at least one protocol control unit for adapting the data volume forwarded between the data field and the buffer according to the size difference between the data field and the buffer.

25. Apparatus according to either of Claims 23 and 24,
**characterized in that** the suitable means comprise at least one additional or extended status register, the content of which identifies the type and/or success and/or result of the respectively used data transmission method.

26. Apparatus according to one of Claims 23 to 25,
**characterized in that** the suitable means comprise at least one additional or extended message memory and/or buffer in which at least one additional message bit identifies the data transmission method used or to be used for the respective message.

27. Use of the method according to one of Claims 1 to 21 during normal operation of a motor vehicle or an industrial installation for the purpose of transmitting data between at least two control devices of the motor vehicle or the industrial installation which are connected via a suitable data bus.

28. Use of the method according to one of Claims 1 to 21 during the production or maintenance of a motor vehicle or an industrial installation for the purpose of transmitting data between a programming unit connected to a suitable data bus for the purpose of programming and at least one control device of the motor vehicle or the industrial installation which is connected to the data bus.

## Revendications

1. Procédé de transmission de données en série dans un système de bus comprenant au moins deux unités de traitement de données participantes qui échangent des messages par le biais du bus,
les messages envoyés possédant une structure logique conformément à la norme CAN ISO 11898-1,
la structure logique incluant un bit de début de trame, un champ d'arbitrage, un champ de commande, un champ de données, un champ CRC, un champ d'accusé de réception et une séquence de fin de trame,
le champ de commande incluant un code de longueur de données qui contient une information sur la longueur du champ de données,
**caractérisé en ce qu'**en présence d'une première condition d'inversion, par dérogation à la norme CAN ISO 11898-1, le champ de données des messages peut contenir plus de huit octets,
les valeurs du code de longueur de données étant interprétées au moins partiellement par dérogation à la norme CAN ISO 11898-1 en vue de définir la taille du champ de données en présence de la première condition d'inversion,
au moins une mémoire intermédiaire (620) étant prévue entre le champ de données et le logiciel d'application (640) pour la retransmission de données, et la quantité de données retransmise, lorsque la taille du champ de données est différente de la taille de la mémoire intermédiaire (620) utilisée, étant adaptée au moins conformément à la différence de taille entre le champ de données et la mémoire intermédiaire (620) utilisée.

2. Procédé selon la revendication 1, **caractérisé en ce qu'**une quantité de données correspondant à la taille de la mémoire intermédiaire est sélectionnée à partir du champ de données d'un message reçu par le biais du bus d'après un procédé de sélection prédéfini ou pouvant être prédéfini, puis retransmise à la mémoire intermédiaire lorsque la taille du champ de données est supérieure à la taille de la mémoire intermédiaire utilisée.

3. Procédé selon la revendication 1 ou 2, **caractérisé en ce que** le contenu de la mémoire intermédiaire est inscrit dans le champ de données d'un message à envoyer par le biais du bus dans au moins une zone prédéfinie ou pouvant être prédéfinie du champ de données du message, et la ou les zones restantes du champ de données sont remplies d'après un procédé prédéfini ou pouvant être prédéfini lorsque la taille du champ de données est supérieure à la taille de la mémoire intermédiaire utilisée.

4. Procédé selon l'une des revendications 1 à 3, **caractérisé en ce qu'**en présence d'une taille du champ de données d'un message reçu par le biais du bus supérieure à huit octets, huit octets prédéfinis ou pouvant être prédéfinis du champ de données sont transférés au logiciel d'application par le biais de l'au moins une mémoire intermédiaire.

5. Procédé selon l'une des revendications 1 à 4, **caractérisé en ce qu'**en présence d'une taille du champ de données d'un message à envoyer par le biais du bus supérieure à huit octets, les bits restants du champ de données sont remplis avec des valeurs prédéfinies ou pouvant être prédéfinies.

6. Procédé selon l'une des revendications 3 à 5, **caractérisé en ce que** les bits dans les zones remplies du champ de données d'un message à envoyer par le biais du bus sont remplis de telle sorte que conformément aux règles de la norme CAN ISO 11898-1, il n'est nécessaire d'insérer aucun bit de bourrage dans ces zones.

7. Procédé selon l'une des revendications 1 à 6, **caractérisé en ce que** suivant la valeur de la première condition d'inversion, chacune des combinaisons de valeurs possibles des quatre bits du code de longueur de données est associée à l'une des tailles autorisées du champ de données.

8. Procédé selon l'une des revendications 1 à 7, **caractérisé en ce que** les messages dans lesquels le champ de données des messages, par dérogation à la norme CAN ISO 11898-1, peut contenir plus de huit octets et les valeurs du code de longueur de données sont interprétées au moins partiellement par dérogation à la norme CAN ISO 11898-1 en vue de définir la taille du champ de données peuvent être différenciés des messages conformes à la norme CAN par une première identification dans le champ d'arbitrage et/ou dans le champ de commande.

9. Procédé selon l'une des revendications 1 à 8, **caractérisé en ce que** la première identification est interprétée dans les unités de traitement de données participantes en vue de déterminer la première condition d'inversion, de sorte que le processus de réception soit adapté à la taille du champ de données en fonction de la première condition d'inversion.

10. Procédé selon l'une des revendications 8 à 9, **caractérisé en ce que** la première identification s'effectue par un premier bit d'identification (EDL) dont la position se trouve entre le dernier bit de l'identificateur et le premier bit du code de longueur de données et à la position duquel, dans les messages conformes à la norme CAN ISO 11898-1, se trouve un bit ayant une valeur fixée.

11. Procédé selon l'une des revendications 1 à 10, **caractérisé en ce que** suivant la valeur d'une condition d'inversion, le champ CRC des messages peut posséder au moins deux nombres de bits différents, au moins l'un des nombres valides de bits dans le champ CRC étant un nombre de bits dérogeant à la norme CAN ISO 11898-1, un polynôme générateur dérogeant à la norme CAN ISO 11898-1 étant utilisé pour définir le contenu d'un tel champ CRC qui possède un nombre de bits différent.

12. Procédé selon l'une des revendications 1 à 11, **caractérisé en ce que** suivant la valeur d'une condition d'inversion supplémentaire, la durée des bits à l'intérieur d'un message peut adopter au moins deux valeurs différentes, la durée des bits étant supérieure ou égale à une valeur minimale prédéfinie d'environ une microseconde pour au moins une première zone pouvant être prédéfinie à l'intérieur du message, et dans au moins une deuxième zone pouvant être prédéfinie à l'intérieur du message, la durée des bits possédant une valeur réduite en comparaison de celle de la première zone.

13. Procédé selon la revendication 12, **caractérisé en ce que** les au moins deux valeurs différentes de la durée des bits à l'intérieur d'un message sont réalisées en cours de fonctionnement en utilisant au moins deux facteurs d'échelle différents pour régler l'unité de temps du bus par rapport à une plus petite unité de temps ou à l'horloge de l'oscillateur.

14. Procédé selon la revendication 12 ou 13, **caractérisé en ce que** les messages dans lesquels la durée des bits à l'intérieur d'un message peut adopter au moins deux valeurs différentes en fonction de la valeur d'une condition d'inversion supplémentaire peuvent être détectés par une identification supplémentaire dans le champ d'arbitrage et/ou dans le champ de commande, l'identification supplémentaire pouvant coïncider avec la première identification.

15. Procédé selon la revendication 14, **caractérisé en ce que** la valeur de la condition d'inversion supplémentaire est déterminée dans les unités de traitement de données participantes en fonction de l'identification supplémentaire, ou coïncide avec la première condition d'inversion, ou est dérivée de la première condition d'inversion, le processus de réception étant adapté aux valeurs différentes des longueurs des bits à l'intérieur d'un message en fonction de la valeur de la condition d'inversion supplémentaire.

16. Procédé selon l'une des revendications 14 à 15, **caractérisé en ce que** l'identification supplémentaire s'effectue par un bit d'identification supplémentaire (BRS) qui se trouve entre le premier bit d'identification et le premier bit du code de longueur de données.

17. Procédé selon l'une des revendications 1 à 16, **caractérisé en ce qu'**il est prévu au moins un bit d'état supplémentaire par le biais duquel sont mises à disposition du logiciel d'application des informations qui se rapportent au procédé de transmission de données dérogeant à la norme CAN ISO 11898-1.

18. Procédé selon la revendication 17, **caractérisé en ce que** ledit bit d'état supplémentaire comprend un bit d'état servant à communiquer la réussite de l'émission et/ou un bit d'état servant à communiquer la réussite de la réception et/ou un ou plusieurs bits d'état servant à communiquer la nature du dernier défaut survenu.

19. Procédé selon la revendication 17 ou 18, **caractérisé en ce que** suivant la fréquence de la survenance de défauts dans un procédé de transmission de données dérogeant à la norme CAN ISO 11898-1, un retour au procédé de transmission conforme à la norme CAN ISO 11898-1 est effectué et au moins un bit d'état est prévu pour communiquer la réussite de l'inversion de retour.

20. Procédé selon l'une des revendications 1 à 19, **caractérisé en ce qu'**au moins un bit de message supplémentaire est prévu dans l'au moins une mémoire intermédiaire et/ou l'au moins une mémoire de messages associée, lequel identifie le procédé de transmission de données utilisé ou à utiliser pour le message correspondant.

21. Procédé selon la revendication 20, **caractérisé en ce que** l'au moins un bit de message supplémentaire correspond à au moins l'une des valeurs de la première identification ou de l'identification supplémentaire ou est dérivé de leurs valeurs ou correspond à au moins l'une des valeurs des bits r1 ou r0 du champ de commande ou SRR du champ d'arbitrage.

22. Dispositif de transmission de données en série dans un système de bus comprenant au moins deux unités de traitement de données participantes qui échangent des messages par le biais du bus,
les messages envoyés possédant une structure logique conformément à la norme CAN ISO 11898-1,
la structure logique incluant un bit de début de trame, un champ d'arbitrage, un champ de commande, un champ de données, un champ CRC, un champ d'accusé de réception et une séquence de fin de trame,
le champ de commande incluant un code de longueur de données qui contient une information sur la longueur du champ de données,
**caractérisé en ce qu'**en présence d'une première condition d'inversion, par dérogation à la norme CAN ISO 11898-1, le champ de données des messages peut contenir plus de huit octets,
les valeurs du code de longueur de données étant interprétées au moins partiellement par dérogation à la norme CAN ISO 11898-1 en vue de définir la taille du champ de données en présence de la première condition d'inversion,
au moins une mémoire intermédiaire étant prévue entre le champ de données et le logiciel d'application pour la retransmission de données, et la quantité de données retransmises, lorsque la taille du champ de données est différente de la taille de la mémoire intermédiaire utilisée, étant adaptée au moins conformément à la différence de taille entre le champ de données et la mémoire intermédiaire utilisée.

23. Dispositif selon la revendication 22, **caractérisé en ce que** le dispositif est conçu, par des moyens appropriés, pour mettre en oeuvre au moins l'un des procédés de transmission de données selon les revendications 2 à 21.

24. Dispositif selon la revendication 23, **caractérisé en ce que** les moyens appropriés comprennent au moins un mécanisme de commande de protocole destiné à adapter la quantité de données retransmise entre le champ de données et la mémoire intermédiaire en fonction de la différence de taille entre le champ de données et la mémoire intermédiaire.

25. Dispositif selon l'une des revendications 23 ou 24, **caractérisé en ce que** les moyens appropriés comprennent au moins un registre d'état supplémentaire ou étendu dont le contenu identifie la nature et/ou la réussite et/ou le résultat du procédé de transmission de données respectivement utilisé.

26. Dispositif selon l'une des revendications 23 à 25, **caractérisé en ce que** les moyens appropriés comprennent au moins une mémoire de messages et/ou une mémoire intermédiaire supplémentaire(s) ou étendue(s), dans laquelle/lesquelles au moins un bit de message supplémentaire identifie le procédé de transmission de données utilisé ou à utiliser pour le message correspondant.

27. Utilisation du procédé selon l'une des revendications 1 à 21 dans le fonctionnement normal d'un véhicule automobile ou d'une installation industrielle pour la transmission de données entre au moins deux contrôleurs du véhicule automobile ou de l'installation industrielle qui sont reliés par le biais d'un bus de données approprié.

28. Utilisation du procédé selon l'une des revendications 1 à 21 pendant la fabrication ou la maintenance d'un véhicule automobile ou d'une installation industrielle pour la transmission de données entre une unité de programmation reliée à un bus de données approprié à des fins de programmation et au moins un contrôleur du véhicule automobile ou de l'installation industrielle qui est relié au bus de données.
